# EUROPÄISCHE PATENTSCHRIFT

(11) **EP 3 610 529 B1**
(45) Veröffentlichungstag und Bekanntmachung des Hinweises auf die Patenterteilung: **06.07.2022**
(21) Anmeldenummer: 18714765.7
(22) Anmeldetag: 29.03.2018
(51) Int. Cl.: H01M 8/0297, H01M 8/1018, H01M 8/0284, H01M 8/0273, C25B 9/19, C25B 9/73, H01M 8/10

(54) **VERKLEBUNG IN ELEKTROCHEMISCHEN ZELLEN UND STAPELN VON ELEKTROCHEMISCHEN ZELLEN**
BONDING IN ELECTROCHEMICAL CELLS, AND STACKING OF ELECTROCHEMICAL CELLS
COLLAGE DANS DES CELLULES ÉLECTROCHIMIQUES ET EMPILEMENT DE CELLULES ÉLECTROCHIMIQUES

(30) Priorität: 10.04.2017 DE 102017206083
(43) Veröffentlichungstag der Anmeldung: 19.02.2020
(73) Patentinhaber: TESA SE, 22848 Norderstedt (DE)
(72) Erfinder: KEITE-TELGENBÜSCHER, Klaus, 22529 Hamburg (DE); TZSCHOCH, Christoph, 38442 Wolfsburg/Fallersleben (DE)
(74) Vertreter: tesa SE
(86) Internationale Anmeldenummer: PCT/EP2018/058160
(87) Internationale Veröffentlichungsnummer: WO 2018/188969

(56) Entgegenhaltungen:
- DE-U1-202009 007 702
- US-A1- 2005 031 933

## Beschreibung

Die vorliegende Erfindung betrifft die Verklebung von Komponenten in einer elektrochemischen Zelle oder in einem Stapel (engl. "stack") von elektrochemischen Zellen, wobei zur Verklebung jeweils ein Haftklebstreifen eingesetzt wird.

Stacks von elektrochemischen Zellen, wie insbesondere Brennstoffzellenstacks, werden derzeit mittels massiver mechanischer Spannvorrichtungen zusammengepresst, um die Mediendichtheit in den einzelnen Zellen herzustellen. Zur Abdichtung werden in der Regel Silikondichtungen verwendet. Diese Silikondichtungen und die mechanische Verspannung sollen durch eine Verklebung der einzelnen Lagen des Stacks ersetzt werden, wobei die Verklebung sowohl die mechanische Verbindung wie auch die Abdichtung der Zellen übernimmt.

Nachteilig an der Verklebung ist die schwierige Demontierbarkeit des Stacks, um einzelne defekte Elemente auszutauschen. Dies ist in der Regel nur unter Zerstörung einzelner Lagen möglich. Auch der Wiederzusammenbau ist aufgrund verbleibender Artefakte und Klebstoffreste aufwändig und mit einem Undichtigkeitsrisiko verbunden.

Die Problematik betrifft insbesondere Brennstoffzellen mit Festelektrolytmembran, ganz besonders solche mit Polymerelektrolytmembran. Über den Bereich der Brennstoffzellen hinaus betrifft sie jedoch auch andere Arten elektrochemischer Zellen, etwa Elektrolysezellen mit Festelektrolytmembran. Dabei sind im Wesentlichen Niedertemperaturzellen (etwa < 120 °C) im Fokus.

Unter den verschiedenen Brennstoffzellentypen wird für den kleinen und mittleren Leistungsbereich aufgrund der niedrigen Betriebstemperatur (ca. 20 °C bis 120 °C) und des stabilen Elektrolyten die NT-PEM-Brennstoffzelle (Niedertemperatur-Protonen-Austausch-Membran, engl.: Proton Exchange Membrane oder Polymer Electrolyte Membrane (PEM)) favorisiert. Die aufwändige Fertigung dieser Brennstoffzellen limitiert aber bislang die Einsatzmöglichkeit in großen Stückzahlen.

Im Rahmen des Forschungsvorhabens Fuel Cell Bond (IGF 17062 N) wurde eine Klebtechnik für Bipolarplatten aus Graphit-Polypropylen-Ruß-Compound und Edelstahl entwickelt. Dabei ist die Anzahl der Handlingeinheiten in der Montage der Stacks von bislang drei auf eine reduziert und die elektrische Leitfähigkeit sowie Wasserstoffdichtigkeit des Systems erreicht worden. Als Klebstoffe wurden Acrylat-Haftklebstoffe, Heißschmelzklebstoffe, sowie reaktive Silikon- und Epoxidklebstoffe verwendet. Elastisch oder plastisch hochdehnbare Haftklebebänder, welche sich durch dehnendes Verstrecken in der Verklebungsebene wieder ablösen lassen, auch als strippfähige Haftklebebänder bezeichnet, wurden jedoch nicht eingesetzt.

Haftklebstoffe, auch Haftklebmassen genannt, sind seit langem bekannt. Als Haftklebmassen werden Klebemassen bezeichnet, die bereits unter relativ schwachem Andruck eine dauerhafte Verbindung mit dem Haftgrund erlauben und nach Gebrauch im Wesentlichen rückstandsfrei vom Haftgrund wieder abgelöst werden können. Haftklebmassen wirken bei Raumtemperatur permanent haftklebrig, weisen also eine hinreichend geringe Viskosität und eine hohe Anfassklebrigkeit auf, so dass sie die Oberfläche des jeweiligen Klebegrunds bereits bei geringem Andruck benetzen. Die Verklebbarkeit der Klebemassen und die Wiederablösbarkeit beruht auf ihren adhäsiven Eigenschaften und auf ihren kohäsiven Eigenschaften. Als Basis für Haftklebmassen kommen verschiedene Verbindungen in Frage. Klebebänder, die mit Haftklebmassen ausgerüstet sind, so genannte Haftklebebänder, werden heute im industriellen und privaten Bereich in vielfältiger Weise verwendet. Üblicherweise bestehen Haftklebebänder aus einer Trägerfolie, die ein- oder beidseitig mit einer Haftklebmasse ausgerüstet ist. Es gibt auch Haftklebebänder, die ausschließlich aus einer Haftklebmasseschicht und keiner Trägerfolie bestehen, die so genannten Transfer-Tapes. Die Zusammensetzung der Haftklebebänder kann sehr unterschiedlich sein und richtet sich nach den jeweiligen Anforderungen der unterschiedlichen Anwendungen. Die Träger bestehen üblicherweise aus Kunststofffolien wie zum Beispiel Polypropylen, Polyethylen, Polyester oder auch aus Papier, Gewebe oder Vliesstoff. Für strippfähige Haftklebebänder werden bevorzugt elastische Träger eingesetzt.

In einem weiteren Projekt "Fuel Cell Fully Bonded" (IGF 18948N) werden mit ähnlichen Klebstoffen weitere Klebverbindungen im Stack entwickelt. Innerhalb dieses Projektes wird an der Optimierung einzelnen Brennstoffzellen sowie der Stackproduktion geforscht. Die aktivseitige Klebung der graphitischen Bipolarplatte (BPP) mit der katalytischen Membran-Elektroden-Einheit (MEA) ermöglicht einen durchgängig automatisierten Ferti-gungsprozess für einen Brennstoffzellenstack. Dazu werden die Bipolarplatte und die MEA für einen klebtechnischen Einsatz geometrisch wie auch oberflächenenergetisch optimiert. Die Oberfläche der MEA birgt mit ihrer teflonisierten Struktur eine Herausforderung für die Klebtechnik. Sowohl einkomponentige, warmhärtende Epoxidharzklebstoffe, als auch Polyolefine werden für den Einsatz im Verbund von BPP mit MEA entwickelt und getestet. Dafür müssen sie den chemischen sowie mechanischen Anforderungen, die innerhalb der Brennstoffzelle auftreten, genügen. Neben dieser Hauptklebung müssen auch alle anderen, auf Anpressdruck beruhenden Dicht- und Kontaktierungsfälle klebtechnisch realisiert werden. Strippfähige Haftklebebänder werden jedoch auch dort nicht eingesetzt.

Klebebänder sind zum abdichtenden Verbinden von Elementen in Brennstoffzellenstacks auch in der Patentliteratur bereits offenbart.

So offenbart DE 10 2005 046 461 A1 eine Brennstoffzellenanordnung, enthaltend zumindest eine Bipolarplattenlage und einen Klebepartner, wobei der Klebepartner mit einem auf einer dreidimensionalen Dichtungsstruktur der Bipolarplattenlage und/oder darum benachbarten Randbereichen der Bipolarplattenlage befindlichen Haftklebstoff oder einem physikalisch abbindenden Klebstoff auf die Bipolarplattenlage aufgeklebt ist. Die Haupteigenschaft einer Dichtung, nämlich Elastizität und Toleranzausgleich, wird dabei allerdings von der dreidimensionalen Dichtungsstruktur übernommen und nicht durch das Verkleben selbst erzielt. Besonders die Elastizität wird durch die Haftklebstoffe nicht erzielbar sein, so dass eine entsprechende dreidimensionale Dichtstruktur, welche elastische Eigenschaften hat, zum Toleranzausgleich notwendig ist. Der Haftklebstoff wird außerdem ausdrücklich nicht als Klebeband zur Verfügung gestellt.

Die DE 10 2009 014 872 A1 bzw. DE 20 2009 007702 U1 offenbart Haftklebebänder für Brennstoffzellen, die sowohl eine hohe Klebkraft als auch einen hohen Kriechrelaxationsfaktor nach DIN EN 13555 aufweisen. Hierfür werden entsprechende Haftklebemassen aus den Gruppen Acrylathaftklebemassen, Synthesekautschukhaftklebemassen oder Silikonhaftklebemassen ausgewählt. Der Kriechrelaxationsfaktor gibt Aufschluss über die Druckbelastungsfestigkeit des Klebebands bei dessen Einsatz als druckbelastetes Dichtelement. Dies betrifft den konventionellen Aufbau von, d.h. Zusammenhalt in, elektrochemischen Zellenstacks und ist für den verklebten Aufbau wenig relevant, da die Druckbelastung hier nicht in dem Maß gegeben ist.

Die EP 2 096 701 A2 offenbart ein nachhärtendes Dichtungsband aus unvernetztem Kautschuk, welches die MEA aufnimmt und diese zwischen den die Membran einfassenden Rahmen verklebt. Der Kautschuk wird nachfolgend vernetzt und damit wird die Verklebung hergestellt. Als Kautschuke werden bevorzugt Ethylene-Propylen-Kautschuk (EPM), Ethylen-Propylen-DienKautschuk (EPDM), Acrylnitril-Butadien-Kautschuk (NBR), und hydrierter Acrylnitril-Butadien-Kautschuk (H-NBR) verwendet, die mit Peroxid vernetzt werden und mit einer klebverstärkenden Komponente aus Resorcinolharz, einem Melaminharz und einem Silan versehen sind. Die klebverstärkenden Komponenten sind in einem geringen Anteil enthalten, so dass das Dichtungsband keine haftklebenden Eigenschaften aufweist. Nach der Vernetzung liegt ein vernetzter Kautschuk vor, der ebenfalls keine haftklebenden Eigenschaften aufweist.

Die US 2005 031933 A1 betrifft ein leitendes Element für eine Brennstoffzelle, mit einem ersten leitenden Blech mit einer ersten Fläche, die einer zweiten Fläche eines zweiten leitenden Blechs gegenüberliegt, wobei die erste und die zweite Fläche mit einer elektrisch leitenden Primerbeschichtung bedeckt sind, die einen Korrosionsschutz vorsieht, wobei die erste und die zweite beschichtete Fläche miteinander an einem oder mehreren Kontaktgebieten durch einen elektrisch leitenden Klebstoff verbunden sind, der zusammen mit dem Primer einen Zielklebelinienwiderstand über jedes des ersten und des zweiten Blechs vorsieht, der niedriger als ein Vergleichskontaktwiderstand des Klebstoffs ohne den Primer ist, und der Zielklebelinienwiderstand für eine Zeitdauer beibehalten wird, die größer als eine Zeitdauer ist, während der der Vergleichskontaktwiderstand beibehalten wird.

Ausgehend vom Stand der Technik liegt der vorliegenden Erfindung somit die Aufgabe zugrunde, Komponenten einer elektrochemischen Zelle oder eines Stacks von elektrochemischen Zellen derart gegeneinander zu verkleben, dass das spätere Rückgängigmachen der Verklebung vereinfacht durchgeführt werden kann und somit das spätere Auswechseln von defekten Komponenten bzw. Einheiten, d.h. Komponentenverbunden, erleichtert werden kann. Auch soll durch die Verklebung typischerweise das Undichtigkeitsrisiko beim Wiederzusammenbau der elektrochemischen Zelle bzw. des Stapels von elektrochemischen Zellen verringert werden.

Die Aufgabe wird durch eine elektrochemische Zelle oder einen Stapel von mindestens zwei elektrochemischen Zellen gemäß Anspruch 1 gelöst, d.h. durch eine elektrochemische Zelle oder einen Stapel von mindestens zwei elektrochemischen Zellen, bei der bzw. bei dem mindestens zwei Komponenten mittels eines Haftklebstreifens gegeneinander verklebt sind, der sich durch dehnendes Verstrecken im Wesentlichen in der Verklebungsebene wieder ablösen lässt, d.h. der strippfähig ist, wobei der Haftklebstreifen eine oder mehrere Haftklebemasseschichten und gegebenenfalls eine oder mehrere Trägerschichten umfasst, und wobei die eine äußere obere und eine äußere untere Fläche des Haftklebstreifens von der oder den Haftklebemasseschichten gebildet sind. Zusätzlich wird die Aufgabe durch die in den Ansprüchen 23 und 25 angegebene Verwendung gelöst.

Das heißt, der Haftklebstreifen weist eine obere äußere und eine untere äußere Haftklebfläche auf, wobei weder auf der oberen äußeren noch auf der unteren äußeren Fläche eine oder mehrere weitere Schichten, insbesondere keine anderen Klebemassenschichten, vorhanden sind, die Bestandteil des Haftklebstreifens sind. Der Haftklebstreifen kann bis zur Verwendung ein- oder beidseitig mit einem Liner eingedeckt sein. Erfindungswesentlich ist, dass die äußeren der Verklebung zugänglichen Flächen des Haftklebstreifens von Haftklebemasse gebildet werden, weil nur so ein strippfähiger Haftklebstreifen bereitgestellt werden kann. Schließlich handelt es sich wie bereits vorstehend beschrieben bei Haftklebemassen um solche Klebemassen, die bereits unter relativ schwachem Andruck eine dauerhafte Verbindung mit dem Haftgrund erlauben und nach Gebrauch im Wesentlichen rückstandsfrei vom Haftgrund wieder abgelöst werden können. Unbeschadet dessen kann der erfindungsgemäß einsetzbare Haftklebstreifen in mindestens einem gegebenenfalls vorhandenen Anfasserbereich, vorzugsweise beidseitig, eine weitere, typischerweise antiadhäsive, Schicht umfassen, die auf der jeweiligen außenliegenden Haftklebemasseschicht angeordnet ist.

Erfindungsgemäß werden die Begriffe "Haftklebstreifen" und "Klebeband" synonym verwendet. Ein strippfähiger Haftklebstreifen wie in Anspruch 1 definiert wird daher erfindungsgemäß auch als strippfähiges doppelseitiges, d.h. beidseitig klebendes, Klebeband bezeichnet.

Bei Verwendung des erfindungsgemäßen Haftklebstreifens ergeben sich dichte, insbesondere wasserdichte Verklebungen der Komponenten in der elektrochemischen Zelle bzw. im Stapel von elektrochemischen Zellen. In der vorliegenden Anmeldung werden die Begriffe "Stapel" und "Stack" synonym verwendet. Die erfindungsgemäßen Verklebungen können ferner leicht gelöst werden. Dadurch kann das Austauschen von defekten Komponenten bzw. Einheiten in der elektrochemischen Zelle bzw. im Stapel von elektrochemischen Zellen erleichtert werden. In der vorliegenden Anmeldung werden die Begriffe "Austauschen" und "Auswechseln" von defekten Komponenten bzw. Einheiten synonym verwendet. Unter "Austauschen" bzw. "Auswechseln" einer defekten Komponente bzw. Einheit einer elektrochemischen Zelle oder eines Stapels von elektrochemischen Zellen kann einerseits verstanden werden, dass nach dem Ausbau der defekten Komponente bzw. Einheit aus der Zelle bzw. dem Stapel eine neue Komponente bzw. Einheit in die Zelle bzw. in den Stapel eingebaut wird. Andererseits kann darunter verstanden werden, dass nach dem Ausbau der defekten Komponente bzw. Einheit aus der Zelle bzw. dem Stapel die defekte Komponente bzw. Einheit repariert wird und anschließend wieder in die Zelle bzw. in den Stapel eingebaut wird. Unter einer "Einheit" ist erfindungsgemäß ein Komponentenverbund gemeint, wie zum Beispiel eine elektrochemische Zelle eines Stapels von elektrochemischen Zellen. Das Lösen der erfindungsgemäßen Verklebungen in einer elektrochemischen Zelle bzw. einem Stapel von elektrochemischen Zellen ermöglicht außerdem, dass erfindungsgemäß verklebte defekte Komponenten, als Alternative zu deren Austausch, über die beim Lösen der entsprechenden Verklebungen freigelegten Oberflächen direkt an der elektrochemischen Zelle bzw. direkt am Stapel der elektrochemischen Zellen repariert werden können. Ein Ausbau der defekten Komponenten ist in diesem Fall nicht erforderlich.

Typischerweise lässt sich der erfindungsgemäß eingesetzte Haftklebstreifen durch dehnendes Verstrecken im Wesentlichen in der Verklebungsebene rückstands- und zerstörungsfrei wieder ablösen. Unter "rückstandsfreiem Ablösen" des Haftklebstreifens ist erfindungsgemäß gemeint, dass er beim Ablösen auf den verklebten Oberflächen der Komponenten keine Klebstoffrückstände hinterlässt. Ferner ist unter "zerstörungsfreiem Ablösen" des Haftklebstreifens erfindungsgemäß gemeint, dass er beim Ablösen die verklebten Oberflächen der Komponenten nicht beschädigt wie beispielsweise zerstört. Durch das rückstands- und zerstörungsfrei mögliche Ablösen des Haftklebstreifens wird das Undichtigkeitsrisiko beim Wiederzusammenbau der elektrochemischen Zelle bzw. des Stapels von elektrochemischen Zellen verringert.

Bei der elektrochemischen Zelle handelt es sich vorzugsweise um eine Brennstoffzelle, bevorzugter um eine Brennstoffzelle mit Festelektrolytmembran, und insbesondere um eine Brennstoffzelle mit Polymerelektrolytmembran. Dementsprechend handelt es sich beim Stapel von elektrochemischen Zellen vorzugsweise um einen Stapel von Brennstoffzellen, bevorzugter von Brennstoffzellen mit Festelektrolytmembran, und insbesondere von Brennstoffzellen mit Polymerelektrolytmembran. Weiter bevorzugt kann es sich bei der elektrochemischen Zelle um eine Elektrolysezelle, vorzugsweise eine Elektrolysezelle mit Festelektrolytmembran, wie insbesondere eine Elektrolysezelle mit Polymerelektrolytmembran handeln. Dementsprechend kann es sich beim Stapel von elektrochemischen Zellen alternativ um einen Stapel von Elektrolysezellen, vorzugsweise von Elektrolysezellen mit Festelektrolytmembran, und insbesondere von Elektrolysezellen mit Polymerelektrolytmembran handeln.

Weitere bevorzugte Ausführungsformen der elektrochemischen Zelle oder des Stapels von elektrochemischen Zellen befinden sich in den Unteransprüchen.

Ferner betrifft die vorliegende Erfindung die Verwendung eines strippfähigen, doppelseitigen Klebebands zum Verkleben von Komponenten in einer elektrochemischen Zelle oder in einem Stapel von elektrochemischen Zellen gegeneinander. Die elektrochemische Zelle bzw. der Stapel von elektrochemischen Zellen sind dabei vorzugsweise wie vorstehend definiert.

Weitere bevorzugte Ausführungsformen der Verwendung befinden sich in den Unteransprüchen.

Außerdem betrifft die vorliegende Erfindung die Verwendung eines strippfähigen, doppelseitigen Klebebands beim Verkleben von Komponenten in einer elektrochemischen Zelle oder in einem Stapel von mindestens zwei elektrochemischen Zellen gegeneinander zur Erzielung von insbesondere rückstands- und zerstörungsfreier Wiederablösbarkeit des Haftklebstreifens durch dehnendes Verstrecken des Haftklebstreifens im Wesentlichen in der Verklebungsebene. Die elektrochemische Zelle bzw. der Stapel von elektrochemischen Zellen sind dabei vorzugsweise wie vorstehend definiert.

Weitere bevorzugte Ausführungsformen der Verwendung befinden sich in den Unteransprüchen.

Unter einer "Haftklebmasse" wird erfindungsgemäß, wie allgemein üblich, ein Stoff verstanden, der - insbesondere bei Raumtemperatur - dauerhaft klebrig sowie klebfähig ist. Charakteristisch für einen Haftklebstoff ist, dass er durch Druck auf ein Substrat aufgebracht werden kann und dort haften bleibt, wobei der aufzuwendende Druck und die Einwirkdauer dieses Drucks nicht näher definiert werden. In manchen Fällen, abhängig von der genauen Art des Haftklebstoffs, der Temperatur und der Luftfeuchtigkeit sowie dem Substrat, reicht die Einwirkung eines kurzfristigen, minimalen Drucks, der über eine leichte Berührung für einen kurzen Moment nicht hinausgeht, um den Haftungseffekt zu erzielen, in anderen Fällen kann auch eine längerfristige Einwirkdauer eines hohen Drucks notwendig sein.

Haftklebstoffe haben besondere, charakteristische viskoelastische Eigenschaften, die zu der dauerhaften Klebrigkeit und Klebfähigkeit führen. Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad des Haftklebstoffes als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Anfließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Zur genaueren Beschreibung und Quantifizierung des Maßes an elastischem und viskosem Anteil sowie des Verhältnisses der Anteile zueinander können die mittels Dynamisch Mechanischer Analyse (DMA) ermittelbaren Größen Speichermodul (G') und Verlustmodul (G") herangezogen werden. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel δ bezeichnet.

Der Speichermodul G' ist wie folgt definiert: G' = (τ/γ) •cos(δ) (τ = Schubspannung, γ = Deformation, δ = Phasenwinkel = Phasenverschiebung zwischen Schubspannungs- und Deformationsvektor). Die Definition des Verlustmoduls G" lautet: G" = (τ/γ) •sin(δ) (τ = Schubspannung, γ = Deformation, δ = Phasenwinkel = Phasenverschiebung zwischen Schubspannungs- und Deformationsvektor).

Ein Stoff gilt im Allgemeinen als haftklebrig und wird im Sinne der Erfindung als haftklebrig definiert, wenn bei Raumtemperatur, hier definitionsgemäß bei 23°C, im Deformationsfrequenzbereich von 10° bis 10¹ rad/sec G' zumindest zum Teil im Bereich von 10³ bis 10⁷ Pa liegt und wenn G" ebenfalls zumindest zum Teil in diesem Bereich liegt. "Zum Teil" heißt, dass zumindest ein Abschnitt der G'-Kurve innerhalb des Fensters liegt, das durch den Deformationsfrequenzbereich von einschließlich 10° bis einschließlich 10¹ rad/sec (Abszisse) sowie den Bereich der G'-Werte von einschließlich 10³ bis einschließlich 10⁷ Pa (Ordinate) aufgespannt wird. Für G" gilt dies entsprechend.

Damit sich Haftklebstreifen durch dehnendes Verstrecken in der Verklebungsebene rückstands- und zerstörungsfrei wieder ablösen lassen, müssen sie bestimmte klebtechnische Eigenschaften besitzen. So muss beim Verstrecken die Klebrigkeit der Haftklebstreifen deutlich sinken. Je niedriger die Klebleistung im verstreckten Zustand ist, umso weniger stark wird der Untergrund beim Ablösen beschädigt oder umso weniger ausgeprägt besteht die Gefahr, dass Rückstände auf dem Verklebungssubstrat zurückbleiben. Besonders deutlich ist diese Eigenschaft bei Haftklebemassen auf Basis von Vinylaromatenblockcopolymeren zu erkennen, bei denen in der Nähe der Streckgrenze die Klebrigkeit auf unter 10 % sinkt.

Damit Haftklebstreifen durch dehnendes Verstrecken leicht und rückstandsfrei wieder abgelöst werden können, müssen sie neben den oben beschriebenen klebtechnischen auch bestimmte mechanische Eigenschaften besitzen. Besonders vorteilhaft ist das Verhältnis der Reißkraft und der Strippkraft größer als zwei, bevorzugt größer als drei. Dabei ist die Strippkraft diejenige Kraft, die aufgewendet werden muss, um einen Haftklebstreifen aus einer Klebfuge durch dehnendes Verstrecken in der Verklebungsebene wiederabzulösen. Diese Strippkraft setzt sich aus der Kraft, die wie oben beschrieben für das Ablösen des Haftklebstreifens von den Verklebungsuntergründen nötig ist, und der Kraft, die zur Verformung des Haftklebstreifens aufgewendet werden muss, zusammen. Die zur Verformung des Haftklebstreifens erforderliche Kraft ist abhängig von der Dicke des Haftklebstreifens. Die zum Ablösen benötigte Kraft ist dagegen in dem betrachteten Dickenbereich des Haftklebstreifens (20 bis 2000 µm) unabhängig von der Dicke des Haftklebstreifens.

Erfindungsgemäß sind mindestens zwei Komponenten der elektrochemischen Zelle bzw. des Stapels von elektrochemischen Zellen mittels eines Haftklebstreifens gegeneinander verklebt. Gegeneinander verklebt bedeutet dabei typischerweise, dass jeweils zumindest ein Teilbereich einer Seitenfläche einer Komponente zumindest einem Teilbereich einer Seitenfläche von zumindest einer weiteren Komponente gegenüberliegend angeordnet ist und diese Bereiche mittels eines Haftklebestreifens miteinander verbunden sind. Die verbundenen Seitenflächen können in parallelen Ebenen liegen, aber auch gekrümmt ausgeführt sein. Die Klebefuge weist bevorzugt eine konstante Dicke auf, kann aber auch mit variierender Dicke ausgeführt sein.

Als Komponenten der elektrochemischen Zelle werden typischerweise alle in sich als Einzelteil handhabbaren Baugruppen bzw. Bauteile angesehen, die zur unmittelbaren Funktion der elektrochemischen Zelle beitragen. Typischerweise nicht von der elektrochemischen Zelle umfasste Komponenten sind damit z.B. ein Gehäuse oder eine Verpackung.

In einer bevorzugten Ausführungsform der vorliegenden Erfindung besteht der erfindungsgemäß eingesetzte Haftklebstreifen aus einer einzigen Haftklebemasseschicht. Ein solches einschichtiges, beidseitig klebendes Klebeband, d.h. doppelseitiges Klebeband, wird auch als "Transfertape" bezeichnet. Dass ein Haftklebstreifen aus einer einzigen Haftklebemasseschicht besteht, schließt erfindungsgemäß nicht aus, dass er in mindestens einem gegebenenfalls vorhandenen Anfasserbereich, vorzugsweise beidseitig, eine weitere, typischerweise antiadhäsive, Schicht umfassen kann, die auf der Haftklebemasseschicht angeordnet ist.

In einer alternativen Ausführungsform umfasst der erfindungsgemäß eingesetzte Haftklebstreifen eine Trägerschicht und zwei Haftklebemasseschichten, wobei die beiden Haftklebemasseschichten auf den gegenüber liegenden Oberflächen der Trägerschicht angeordnet sind und die eine äußere obere und eine äußere untere Fläche des Haftklebstreifens bilden. Dabei handelt es sich somit ebenfalls um ein doppelseitiges Klebeband. In der vorliegenden Anmeldung kann unter "Anordnung" der Haftklebemasseschichten auf den Oberflächen der Trägerschicht eine solche Anordnung gemeint sein, bei der die Haftklebemasseschichten in direktem Kontakt mit den Oberflächen der Trägerschicht stehen, d.h. direkt auf den Oberflächen angeordnet sind. Alternativ kann damit auch eine solche Anordnung gemeint sein, bei der zwischen mindestens einer der Haftklebemasseschichten, ggf. beiden Haftklebmassenschichten, und den Oberflächen der Trägerschicht mindestens eine weitere Schicht vorliegt. Vorzugsweise stehen im Haftklebstreifen die beiden Haftklebemasseschichten in direktem Kontakt mit den Oberflächen der Trägerschicht. In diesem Fall besteht der erfindungsgemäß eingesetzte Haftklebstreifen aus einer Trägerschicht und zwei Haftklebemasseschichten, wobei die beiden Haftklebemasseschichten auf den gegenüber liegenden Oberflächen der Trägerschicht angeordnet sind und somit die eine äußere obere und eine äußere untere Fläche des Haftklebstreifens bilden. Dass ein Haftklebstreifen aus einer Trägerschicht und zwei beidseitig angeordneten Haftklebemasseschichten besteht, schließt erfindungsgemäß nicht aus, dass er in mindestens einem gegebenenfalls vorhandenen Anfasserbereich, vorzugsweise beidseitig, eine weitere, typischerweise antiadhäsive, Schicht umfassen kann, die auf der jeweiligen außenliegenden Haftklebemasseschicht angeordnet ist. Optional können die äußeren Flächen des erfindungsgemäßen Haftklebstreifens vor dessen Verwendung zum Verkleben von Komponenten einer elektrochemischen Zelle oder eines Stapels von elektrochemischen Zellen gegeneinander mit beidseitig antiadhäsiv beschichteten Materialien ausgerüstet sein wie ein Trennpapier oder eine Trennfolie, auch Liner genannt, und zwar als temporärer Träger. Ein Liner (Trennpapier, Trennfolie) ist gemäß der vorliegenden Erfindung, soweit nicht anders angegeben, nicht Bestandteil eines Haftklebstreifens, sondern nur ein Hilfsmittel zu dessen Herstellung, Lagerung und/oder für die Weiterverarbeitung durch Stanzen. Darüber hinaus ist ein Liner im Gegensatz zu einem Klebebandträger nicht fest mit einer Klebemassenschicht verbunden. Dementsprechend ist im erfindungsgemäßen Haftklebstreifen der Träger, sofern vorhanden, fest mit den benachbarten Klebemasseschichten verbunden. In der vorliegenden Anmeldung werden die Begriffe "Träger" und "Trägerschicht" synonym verwendet.

Im erfindungsgemäßen Haftklebstreifen können weitere Schichten, wie sie dem Fachmann im Bereich der Klebebänder geläufig sind, ebenfalls enthalten sein, wie z.B. weitere Klebstoff- oder Trägerschichten, Primer oder Releaseschichten oder Schichten mit spezifischen physikalischen Funktionen (z.B. optisch wirksame Schichten, permeationshemmende oder -fördernde Schichten, thermisch oder elektrisch leitfähige Schichten). Der Haftklebstreifen kann vor dessen Einsatz zum Verkleben einer elektrochemischen Zelle oder eines Stapels von elektrochemischen Zellen z.B. als Blatt, als Rolle oder als Stanzling zur Verfügung gestellt werden. Er kann die von seinem äußeren Umfang eingegrenzte Fläche vollständig bedecken oder auch Teile davon freilassen, wie z.B. bei einem rahmenförmigen Stanzling oder einem perforierten Abschnitt. Vorzugsweise weisen alle Schichten des Haftklebstreifens im Wesentlichen die Form eines Quaders auf. Weiter vorzugsweise sind alle Schichten vollflächig miteinander verbunden. Optional können ein oder mehrere typischerweise nicht haftklebrige Anfasserbereiche vorgesehen sein, von welchen aus der Ablöseprozess ausgeführt werden kann.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte, Stanzlinge, Etiketten und dergleichen.

Der erfindungsgemäß zum Verkleben von Komponenten einer elektrochemischen Zelle oder eines Stapels von elektrochemischen Zellen gegeneinander eingesetzte Haftklebstreifen ist vorzugsweise derart ausgestaltet, dass er mindestens einen über die zu verklebenden Oberflächen der Komponenten hervorstehenden typischerweise nicht haftklebrigen Anfasserbereich aufweist, von welchem aus der Ablöseprozess durch dehnendes Verstrecken ausgeführt werden kann. Ein nicht haftklebriger Anfasserbereich hat gegenüber einem haftklebrigen Anfasserbereich mehrere Vorteile. Zum einen bleibt er in unterschiedlichster Umgebung typischerweise länger unverschmutzt. Zum anderen lässt er sich beim Abziehen leichter bedienen, insbesondere nach dem Abziehen besser wieder von den Fingern abtrennen.

Typischerweise ist der Anfasserbereich des Haftklebstreifens nicht haftklebrig, wobei es sich beim Anfasserbereich vorzugsweise
(i) um eine Fortpflanzung der optional vorhandenen Trägerschicht handelt, oder
(ii) um eine Fortpflanzung der Schichtenfolge des Haftklebstreifens handelt, wobei im Anfasserbereich auf der einen äußeren oberen und der einen äußeren unteren Fläche des Haftklebstreifens unabhängig voneinander jeweils eine antiadhäsive Schicht angeordnet ist. Bei der antiadhäsiven Schicht handelt es sich vorzugsweise um beidseitig antiadhäsiv beschichtetes Material wie ein Trennpapier oder eine Trennfolie. Beispielsweise kann es sich um ein beidseitig silikonisiertes Trennpapier oder um eine beidseitig silikonisierte Trennfolie handeln. Bei der Schichtenfolge kann es sich auch um eine einzige Schicht handeln, nämlich dann, wenn der Haftklebstreifen aus einer einzigen Haftklebemasseschicht besteht.

Alternativ ist der Anfasserbereich haftklebrig. Dabei handelt es sich typischerweise um eine Fortpflanzung der Schichtenfolge des Haftklebstreifens, wobei im Anfasserbereich auf den beiden Oberflächen des Haftklebstreifens keine antiadhäsive Schicht angeordnet ist. In einer weiteren alternativen Ausführungsform ist der Anfasserbereich in einem Teilbereich haftklebrig und in einem weiteren Teilbereich nicht haftklebrig. Davon ist auch eine Variante umfasst, bei der eine Oberfläche des Anfasserbereichs haftklebrig ist und die andere Oberfläche des Anfasserbereichs nicht haftklebrig ist.

In einer Ausführungsform der Erfindung ist der in der elektrochemischen Zelle oder im Stapel von elektrochemischen Zellen eingesetzte Haftklebstreifen derart ausgestaltet, dass die mittels des Haftklebstreifens gegeneinander verklebten Komponenten vollflächig verklebt sind.

In einer bevorzugten Ausführungsform der Erfindung ist der in der elektrochemischen Zelle oder im Stapel von elektrochemischen Zellen eingesetzte Haftklebstreifen derart ausgestaltet, dass die mittels des Haftklebstreifens gegeneinander verklebten Komponenten teilflächig verklebt sind, wobei der Haftklebstreifen insbesondere (i) als Klebebandabschnitt (Stanzling) vorliegt, der eine Verklebung am Umfang der Komponenten bewirkt, und/oder (ii) mindestens eine Perforation aufweist. Bei der teilflächigen Verklebung werden z. B. medienführende Bereiche innerhalb der Verklebungsflächen vom Haftklebstreifen frei gehalten oder die Verklebung findet nur am Umfang der zu verklebenden Komponenten statt, wie beispielsweise die Verklebung einer Bipolarplatte oder Bipolarhalbplatte mit der Randverstärkung einer Membran-Elektroden-Einheit einer Brennstoffzelle. Beim Stanzling handelt es sich vorzugsweise um einen rahmenförmigen Stanzling, da hierbei das Wiederablösen des Haftklebstreifens durch dehnendes Verstrecken im Wesentlichen in der Verklebungsebene erleichtert ist.

Als durch dehnendes Verstrecken wiederablösbare Haftklebemasseschichten können alle dem Fachmann bekannten Haftklebemasseschichten verwendet werden, die diese Eigenschaft aufweisen.

Erfindungsgemäß einsetzbare Haftklebstreifen sind beispielsweise aus der US 4,024,312 A, DE 33 31 016 C2, WO 92/11332 A1, WO 92/11333 A1, DE 42 22 849 C1, WO 95/06691 A1, DE 195 31 696 A1, DE 196 26 870 A1, DE 196 49 727 A1, DE 196 49 728 A1, DE 196 49 729 A1, DE 197 08 364 20 A1, DE 197 20 145 A1, DE 198 20 858 A1, WO 99/37729 A1, WO 2002 004571 A1, DE 100 03 318 A1, DE 42 33 872 C1, DE 195 11 288 C1, US 5,507,464 B1, US 5,672,402 B1 und WO 94/21157 A1 bekannt. Spezielle Ausführungsformen eines erfindungsgemäß einsetzbaren Haftklebstreifens sind auch in der DE 44 28 587 C1, DE 44 31 914 C1, WO 97/07172 A1, DE 196 27 400 A1, WO 98/03601 A1 und DE 196 49 636 A1, 30 DE 197 20 526 A1, DE 197 23 177 A1, DE 197 23 198 A1, DE 197 26 375 A1, DE 197 56 084 C1, DE 197 56 816 A1, DE 198 42 864 A1, DE 198 42 865 A1, WO 99/31193 A1, WO 99/37729 A1, WO 99/63018 A1, WO 00/12644 A1, DE 199 38 693 A1, WO 2014/095382 A1, WO 00/13888 A1 und DE 10 2007 034474 A1 beschrieben.

Der erfindungsgemäße Haftklebstreifen kann beispielsweise mindestens eine Haftklebemasseschicht umfassen, die auf Acrylatcopolymer, Silikon(co)polymer, Nitrilkautschuk, d.h. Acrylnitril-Butadien-Kautschuk, oder chemisch oder physikalisch vernetztem Synthesekautschuk basiert.

Haftklebemasseschichten auf Basis von Acrylatcopolymer erreichen aber insbesondere auf unpolaren Untergründen weniger hohe Verklebungsfestigkeiten und verlieren weniger stark an Klebkraft während des dehnenden Verstreckens als dies zum Beispiel bei Haftlebemassenschichten auf Vinylaromatenblockcopolymerbasis der Fall ist. Aus der Gruppe der Acrylatcopolymere werden bevorzugt UV-vernetzte Acrylatcopolymere oder AcrylatBlockcopolymere eingesetzt. So offenbart die DE 101 29 608 A1 strippfähige Haftklebstreifen, die mindestens eine Haftklebemasse basierend auf Acrylat-Blockcopolymeren enthalten. AcrylatBlockcopolymer-basierende Haftklebemasseschichten weisen typischerweise nicht die sehr hohen Klebkräfte auf, die insbesondere mit harzmodifizierten Polystyrol-Polydien-Blockcopolymeren erreicht werden können, weisen aber einen erhöhten Klebkraftabfall während des dehnenden Verstreckens gegenüber anderen Acrylatpolymeren auf. Acrylat-Blockcopolymerbasierende Haftklebemasseschichten sind außerdem aufgrund ihrer hohen Langzeittemperaturbeständigkeit bevorzugt.

Wenn der erfindungsgemäße Haftklebstreifen mindestens eine Haftklebemasseschicht umfasst, die auf Acrylatblockcopolymer basiert, dann handelt es sich bei der Haftklebemasseschicht typischerweise um eine Haftklebemasseschicht auf Basis von zumindest einem Blockcopolymer, das zumindest teilweise aus (Meth-)Acrylsäurederivaten aufgebaut ist, wobei das Blockcopolymer mindestens die Einheit P(A)-P(B)-P(A) aus wenigstens einem Polymerblock P(B) und wenigstens zwei Polymerblöcken P(A) aufweist, und wobei
- P(A) unabhängig voneinander Homo- oder Copolymerblöcke aus Monomeren A repräsentieren, wobei die Polymerblöcke P(A) jeweils eine Erweichungstemperatur im Bereich von +20°C bis +175°C aufweisen, d.h. einen Hartblock darstellen,
- P(B) einen Homo- oder Copolymerblock aus Monomeren B repräsentiert, wobei der Polymerblock P(B) eine Erweichungstemperatur im Bereich von -100°C bis +10°C aufweist, d.h. einen Elastomerblock darstellt, und
- die Polymerblöcke P(A) und P(B) nicht homogen miteinander mischbar sind.

Haftklebemasseschichten auf Basis derartiger Acrylatblockcopolymere weisen insbesondere eine hohe Stabilität gegen Einwirkung von Licht, insbesondere UV-Strahlung, thermooxidativen Abbau und Ozonolyse auf. Außerdem weisen sie deutliche Tackverluste unter Verstreckung auf und garantieren damit einen sicheren Ablöseprozess des Haftklebstreifens durch dehnendes Verstrecken. Derartige Haftklebemasseschichten zeichnen sich außerdem durch die folgenden Kriterien aus:
- Nutzungsmöglichkeit einer großen Anzahl von Monomeren für die Synthese der Haftklebemasse, so dass eine breite Palette von Haftklebeeigenschaften durch die chemische Zusammensetzung eingestellt werden kann,
- vielfache Wiederverwendbarkeit der strippfähigen Haftklebstreifen,
- niedrige Spannungswerte im Bereich mittlerer Dehnungen von ca. 200% bis 400% und damit ein leichtes Wiederablösen durch dehnendes Verstrecken in der Verklebungsebene,
- Ermöglichung der Herstellung dicker, hoch kohäsiver Haftklebemasseschichten, wie sie u. a. für die Herstellung einschichtiger strippfähiger Haftklebstreifen notwendig sind,
- Wahlmöglichkeit bei Einsatz der Comonomere, welche eine Steuerung der thermischen Stabilität ermöglicht, insbesondere auch eine anhaltend gute Kohäsion und damit Halteleistung bei hohen Temperaturen (> +60°C).

Strippfähige Haftklebstreifen auf Basis von derartigen acrylatblockcopolymerhaltigen Haftklebemassen weisen überraschend einen für rückstands- und zerstörungsfreies Ablösen essentiellen Tackverlust unter Verstreckung auf.

Vorzugsweise kann der Aufbau des Blockcopolymers/der Blockcopolymere durch eine oder mehrere der folgenden allgemeinen Formeln beschrieben werden:
P(A)-P(B)-P(A), P(B)-P(A)-P(B)-P(A)-P(B), [P(A)-P(B)]ₙX, [P(B)-P(A)-P(B)]ₙX und/oder [P(A)-P(B)]ₙX[P(B)]ₘ,
- wobei n = 2 bis 12, m = 1 bis 12 und X einen di- bzw. multifunktionellen Verzweigungsbereich darstellt,
- wobei die Polymerblöcke P(A) unabhängig voneinander Homo- oder Copolymerblöcke aus den Monomeren A repräsentieren, wobei die Polymerblöcke P(A) jeweils eine Erweichungstemperatur im Bereich von +20°C bis +175°C aufweisen,
- und wobei die Polymerblöcke P(B) unabhängig voneinander Homo- oder Copolymerblöcke aus den Monomeren B repräsentieren, wobei die Polymerblöcke P(B) jeweils eine Erweichungstemperatur im Bereich von -100°C bis +10°C aufweisen.

Ebenso vorzugsweise ist das Verhältnis der Kettenlängen der Polymerblöcke P(A) zu denen der Polymerblöcke P(B) so gewählt, dass die Polymerblöcke P(A) als disperse Phase ("Domänen") in einer kontinuierlichen Matrix der Polymerblöcke P(B) vorliegen, insbesondere als kugelförmige oder verzerrt kugelförmige Domänen.

Als Monomere für den Elastomerblock P(B) werden vorteilhaft Acrylmonomere eingesetzt. Hierfür sind prinzipiell alle dem Fachmann geläufigen Acrylverbindungen, welche sich zur Synthese von Polymeren eignen, einsetzbar. Bevorzugt werden solche Monomere gewählt, welche Erweichungstemperaturen des Polymerblocks P(B) auch in Kombination mit einem oder mehreren weiteren Monomeren von kleiner +10°C bedingen. Entsprechend können bevorzugt die Vinylmonomere gewählt werden.

Für die Präparation der Polymerblöcke P(B) werden vorteilhaft zu 75 bis 100 Gew.-% Acrylsäure- und/oder Methacrylsäurederivate der allgemeinen Struktur CH₂=CH(R¹)(COOR²) eingesetzt, wobei R¹ = H oder CH₃ und R² = H oder lineare, verzweigte oder ringförmige, gesättigte oder ungesättigte Alkylreste mit 1 bis 30, insbesondere mit 4 bis 18 Kohlenstoffatomen darstellt, und zu 0 bis 25 Gew.-% Vinylverbindungen, welche günstigenfalls funktionelle Gruppen enthalten. Acrylmonomere, die sehr bevorzugt als Komponenten für Polymerblöcke P(B) eingesetzt werden, umfassen Acryl- und Methacrylsäurealkylester mit Alkylgruppen bestehend aus 4 bis 9 C-Atomen. Spezifische Beispiele für entsprechende Verbindungen sind, ohne sich durch diese Aufzählung einschränken zu wollen, n-Butylacrylat, n-Pentylacrylat, n-Hexylacrylat, n-Heptylacrylat, n-Octylacrylat, n- Nonylacrylat, deren verzweigte Isomere, wie z. B. 2-Ethylhexylacrylat und Isooctylacrylat sowie cyclische Monomere wie z. B. Cyclohexyl- oder Norbornylacrylat und Isonorbornylacrylat. Weiterhin können optional als Monomere für Polymerblöcke P(B) Vinylmonomere aus den folgenden Gruppen eingesetzt werden: Vinylester, Vinylether, Vinylhalogenide, Vinylidenhalogenide, sowie Vinylverbindungen, die aromatische Zyklen und Heterozyklen in α-Stellung enthalten. Auch hier seien beispielhaft ausgewählte erfindungsgemäß einsetzbare Monomere genannt: Vinylacetat, Vinylformamid, Vinylpyridin, Ethylvinylether, 2-Ethylhexylvinylether, Butylvinylether, Vinylchlorid, Vinylidenchlorid, Acrylnitril.

Ausgangsmonomere für die Polymerblöcke P(A) werden bevorzugt derart ausgewählt, dass die resultierenden Polymerblöcke P(A) mit den Polymerblöcken P(B) nicht mischbar sind und entsprechend Mikrophasenseparation eintritt. Vorteilhafte Beispiele für Verbindungen, welche als Monomere A eingesetzt werden, sind Vinylaromaten, Methylmethacrylat, Cyclohexylmethacrylat und Isobornylmethacrylat. Besonders bevorzugte Beispiele sind Methylmethacrylat und Styrol, wobei diese Aufzählung keinen Anspruch auf Vollständigkeit erhebt.

Weiterhin können die Polymerblöcke P(A) aber auch als Copolymer aufgebaut sein, das zu mindestens 75 Gew.-% aus den vorstehenden Monomeren A, das zu einer hohen Erweichungstemperatur führt, oder einem Gemisch dieser Monomere bestehen kann, aber bis zu 25 Gew.-% Monomere B enthält, die zu einer Erniedrigung der Erweichungstemperatur des Polymerblocks P(A) führen.

In einer weiteren günstigen Ausführungsform der erfinderischen stripfähigen Systeme sind Polymerblöcke P(A) und/oder P(B) derart funktionalisiert, dass eine thermisch initiierte Vernetzung durchgeführt werden kann. Als Vernetzer können unter anderem in günstiger Weise gewählt werden: Epoxide, Aziridine, Isocyanate, Polycarbodiimide und Metallchelate, um nur einige zu nennen.

In einer weiteren bevorzugten Ausführungsform sind den Haftklebemasseschicht auf Basis von Acrylatblockcopolymeren Klebharze beigemischt, insbesondere solche, die mit den Polymerblöcken P(B) verträglich sind, bevorzugt zu einem Gewichtsanteil bis zu 40 Gew.-%, sehr bevorzugt bis zu 30 Gew.-%, bezogen auf die Haftklebemasseschicht, und/oder sind der Haftklebemasseschicht Weichmacher, Füllstoffe, Keimbildner, Blähmittel, Compoundierungsmittel und/oder Alterungsschutzmittel zugesetzt.

Unter einem "Klebharz" wird entsprechend dem allgemeinen Fachmannverständnis ein niedermolekulares, oligomeres oder polymeres Harz verstanden, das die Adhäsion (den Tack, die Eigenklebrigkeit) der Haftklebemasse im Vergleich zu der kein Klebharz enthaltenden, ansonsten aber identischen Haftklebemasse erhöht.

Alternativ kann der erfindungsgemäße Haftklebstreifen mindestens eine Haftklebemasseschicht auf Basis von festem Acrylnitril-Butadien-Kautschuk umfassen, die ferner Klebharz enthält, wobei der Anteil an Klebharz bei insgesamt 30 bis 130 phr liegt. Derartige Haftklebemasseschichten sind in DE 10 2015 215 247 A1 offenbart. Sie sind kostengünstig und resistent gegenüber unterschiedlichsten Chemikalien, wobei sie insbesondere auch nach längerer Lagerung in verschiedenen Medien keine Klebkraft verlieren. Erfindungsgemäße Haftklebstreifen, die mindestens eine solche Haftklebemasseschicht umfassen, lassen sich außerdem durch dehnendes Verstrecken sowohl in der Verklebungsebene, als auch in einem Winkel von mehr als 45°, wie zum Beispiel von 90°, gegenüber der Verklebungsebene rückstands- und zerstörungsfrei wieder ablösen. Insbesondere ist die Reißeranfälligkeit, d.h. die Häufigkeit des Abreißens des Haftklebstreifens, beim dehnenden Verstrecken sowohl in der Verklebungsebene, als auch in einem Winkel von mehr als 45°, wie zum Beispiel von 90°, gegenüber der Verklebungsebene sehr gering. Derartige Haftklebestreifen weisen ferner üblicherweise eine hohe Schockresistenz auf.

Wenn in der Haftklebemasseschicht auf Basis von festem Acrylnitril-Butadien-Kautschuk der Anteil an Klebharz bei insgesamt 30 bis 130 phr liegt, ist die Haftklebemasseschicht insbesondere gleichzeitig durch gute Adhäsions- und Kohäsionswerte gekennzeichnet. Die in der vorliegenden Anmeldung gemachten Angaben in phr (engl. "parts per hundred rubber") bedeuten jeweils Gewichtsteile der betreffenden Komponente bezogen auf 100 Gewichtsteile aller festen Kautschukkomponenten der Haftklebemasse, also beispielsweise ohne Berücksichtigung von Klebharz oder flüssigem Kautschuk.

Flüssige Kautschuke zeichnen sich gegenüber festen Kautschuken dadurch aus, dass sie einen Erweichungspunkt, d.h. eine Erweichungstemperatur (Ring & Ball, nach ASTM E28), von weniger als 40 °C aufweisen. Feste Kautschuke sind somit dadurch gekennzeichnet, dass sie keinen Erweichungspunkt von weniger als 40 °C aufweisen.

Vorzugsweise beträgt der Acrylnitrilgehalt in dem festen Acrylnitril-Butadien-Kautschuk der Haftklebemassenschicht zwischen 10 und 45 Gew.-%, bevorzugter zwischen 10 und 30 Gew.-%, noch bevorzugter zwischen 10 und 25 Gew.-%, und insbesondere zwischen 15 und 20 Gew.-%. In diesen Bereichen lassen sich besonders geringe Reißeranfälligkeiten und besonders hohe Schockresistenzen erzielen. Der Anteil an festem Acrylnitril-Butadien-Kautschuk in der Haftklebemasse auf Basis von festem Acrylnitril-Butadien-Kautschuk der Haftklebemassenschicht beträgt insgesamt vorzugsweise mindestens 50 Gew.-%, bezogen auf das Gesamtgewicht der Haftklebemasseschicht.

Vorzugsweise kann in der Haftklebemasseschicht auf Basis von festem Acrylnitril-Butadien-Kautschuk des erfindungsgemäßen Haftklebestreifens als weiteres Basispolymer mindestens ein flüssiger Acrylnitril-Butadien-Kautschuk enthalten sein, wobei der Acrylnitrilgehalt in dem mindestens einen flüssigen Acrylnitril-Butadien-Kautschuk vorzugsweise zwischen 10 und 45 Gew.-% liegt, bevorzugter zwischen 10 und 30 Gew.-%, noch bevorzugter zwischen 10 und 25 Gew.-%, und insbesondere zwischen 15 und 20 Gew.-%. Der Anteil an flüssigem Acrylnitril-Butadien-Kautschuk in der Haftklebemasseschicht auf Basis von festem Acrylnitril-Butadien-Kautschuk beträgt insgesamt vorzugsweise bis zu 20 Gew.-%, bevorzugter zwischen 1 und 15 Gew.-%, und insbesondere zwischen 2 und 10 Gew.-%, jeweils bezogen auf das Gesamtgewicht der Haftklebemasseschicht.

In der Haftklebemassenschicht auf Basis von festem Acrylnitril-Butadien-Kautschuk können dem Acrylnitril-Butadien-Kautschuk zur Verbesserung der Verarbeitbarkeit thermoplastische Elastomere wie beispielsweise Synthesekautschuke mit einem Anteil von bis zu 5 Gew.-% zugesetzt werden, bezogen auf das Gesamtgewicht der Haftklebemasseschicht. Stellvertretend genannt seien an dieser Stelle vor allem die besonders verträglichen Styrol-lsopren-Styrol(SIS)- und Styrol-Butadien-Styrol(SBS)-Typen.

In der Haftklebemassenschicht auf Basis von festem Acrylnitril-Butadien-Kautschuk liegt der Anteil an Klebharz vorzugsweise bei insgesamt 40 bis 120 phr, bevorzugter bei insgesamt 50 bis 110 phr uns insbesondere bei insgesamt 60 bis 100 phr. Hierdurch lassen sich typischerweise gleichzeitig besonders gute Adhäsions- und Kohäsionswerte erzielen. Als Klebharze können in der Haftklebemassenschicht insbesondere hydrierte und nicht hydrierte Kohlenwasserstoffharze und Polyterpenharze eingesetzt werden.

Alternativ kann der erfindungsgemäße Haftklebstreifen mindestens eine Haftklebemasseschicht auf Basis von Polyisobutylen-Homopolymer und/oder Polyisobutylen-Copolymer umfassen. Einen solchen Haftklebstreifen beschreibt beispielsweise die WO 2010/141248 A1. Die Copolymere können beispielsweise statistische Copolymere, Blockcopolymere oder eine Mischung davon sein. Typischerweise sind die Copolymere zu mindestens 75 Gew.-%, vorzugsweise mindestens 80 Gew.-%, bevorzugter mindestens 85 Gew.-% und insbesondere zu mindestens 90 Gew.-% aus Isobutylen gebildet. Haftklebemasseschichten auf Basis von Polyisobutylen-Homopolymer und/oder Polyisobutylen-Copolymer weisen zwar eine geringe Klebkraft auf, sind aber aufgrund ihrer geringen Wasserdampfpermeabilität bevorzugt. Letzteres gilt insbesondere in ihrer Ausführung als Polyisobutylen-Blockcopolymer-basierte Haftklebemassen. Unter einem Polyisobutylen-Blockcopolymer ist erfindungsgemäß ein Blockcopolymer zu verstehen, das mindestens einen Polymerblock enthält, der überwiegend gebildet ist durch Polymerisation von Isobutylen.

Das Polyisobutylenpolymer (Homopolymer und/oder Copolymer) der Haftklebemasseschicht kann gehärtet sein. Ferner kann die Haftklebemasseschicht Klebharz enthalten.

Bevorzugt umfasst der erfindungsgemäße Haftklebstreifen mindestens eine Haftklebemasseschicht auf Basis von Vinylaromatenblockcopolymer. Derartige Haftklebemasseschichten können insbesondere hohe Klebkräfte und gleichzeitig einen hohen Klebkraftabfall während des dehnenden Verstreckens aufweisen.

Vorzugsweise enthalten die Vinylaromatenblockcopolymere Polymerblöcke (i) überwiegend gebildet von Vinylaromaten (A-Blöcke), bevorzugt Styrol, und gleichzeitig (ii) solche überwiegend gebildet durch Polymerisation von 1,3-Dienen (B-Blöcke), wie zum Beispiel Butadien, Isopren oder einer Mischung aus den beiden Monomeren, oder von Butylenen (B-Blöcke), wie zum Beispiel Isobutylen. Diese B-Blöcke weisen üblicherweise eine geringe Polarität auf. Sowohl Homo- als auch Copolymerblöcke sind als B-Blöcke nutzbar.

Die aus den A- und B-Blöcken resultierenden Vinylaromatenblockcopolymere können gleiche oder unterschiedliche B-Blöcke enthalten, die teilweise, selektiv oder vollständig hydriert sein können. Vorzugsweise sind die B-Blöcke vollständig hydriert, d.h. gesättigt, da die sich ergebenden Blockcopolymere eine bessere Alterungsbeständigkeit aufweisen. Die Blockcopolymere können lineare A-B-A Strukturen aufweisen. Einsetzbar sind ebenfalls Blockcopolymere von radialer Gestalt sowie sternförmige und lineare Multiblockcopolymere. Als weitere Komponenten können A-B Zweiblockcopolymere vorhanden sein. Sämtliche der vorgenannten Polymere können alleine oder im Gemisch miteinander genutzt werden. Bevorzugt werden A-B-A-Triblockcopolymere sowie als weitere Komponente A-B-Diblockcopolymere.

Vorzugsweise wird als Vinylaromatenblockcopolymer mindestens ein Synthesekautschuk in Form eines Blockcopolymers mit einem Aufbau A-B, A-B-A, (A-B)ₙ, (A-B)ₙX oder (A-B-A)ₙX eingesetzt, worin die Blöcke A unabhängig voneinander für ein Polymer, gebildet durch Polymerisation mindestens eines Vinylaromaten, die Blöcke B unabhängig voneinander für ein Polymer, gebildet durch Polymerisation von konjugierten Dienen mit 4 bis 18 C-Atomen, oder für ein teilweise, selektiv oder vollständig hydriertes Derivat eines solchen Polymers, X für den Rest eines Kopplungsreagenzes oder Initiators und n für eine ganze Zahl ≥ 2 stehen.

Die Vinylaromatenblöcke A der Vinylaromatenblockcopolymere stellen somit in einer bevorzugten Ausführungsform Endblöcke dar.

Anstelle der bevorzugten Polystyrolblöcke können in den Vinylaromatenblockcopolymeren als Vinylaromaten auch Polymerblöcke auf Basis anderer aromatenhaltiger Homo- und Copolymere (bevorzugt Cs- bis C₁₂-Aromaten) mit Glasübergangstemperaturen von über 75°C verwendet werden, wie z.B. α-methylstyrolhaltige Aromatenblöcke. Weiterhin können auch gleiche oder unterschiedliche A-Blöcke enthalten sein.

Das Monomer für den Block B des Vinylaromatenblockcopolymers ist vorzugsweise ausgewählt aus der Gruppe bestehend aus Butadien, (Iso)Butylen, Isopren, Ethylbutadien, Phenylbutadien, Piperylen, Pentadien, Hexadien, Ethylhexadien und Dimethylbutadien sowie einer beliebigen Mischung dieser Monomere, und insbesondere Butadien, Isopren oder einer Mischung aus den beiden Monomeren.

Verwendet werden können auch Vinylaromatenblockcopolymere, die neben den vorstehend beschriebenen Blöcken A und B zumindest einen weiteren Block enthalten, wie z.B. A-B-C-Blockcoplymere.

Denkbar, aber erfindungsgemäß nicht bevorzugt ist auch der Einsatz von Haftklebemasseschichten auf Basis von Blockcopolymeren, in denen die vorstehend genannten B-Blöcke mit A-Blöcken von anderer chemischer Natur als Vinylaromaten kombiniert sind, die eine Glasübergangstemperatur oberhalb der Raumtemperatur (20 °C) zeigen, wie zum Beispiel Polymethylmethacrylat.

Als Vinylaromatenblockcopolymer kann auch mindestens ein Synthesekautschuk in Form eines Blockcopolymers mit einem Aufbau A-B-A, (A-B)ₙ, (A-B)ₙX oder (A-B-A)ₙX eingesetzt werden, worin die Blöcke A unabhängig voneinander für ein Polymer, gebildet durch Polymerisation mindestens eines Vinylaromaten, wobei zumindest ein Teil der Blöcke A sulfoniert ist, die Blöcke B unabhängig voneinander für ein Polymer, gebildet durch Polymerisation von Dienen oder von Alkenen, X für den Rest eines Kopplungsreagenzes oder Initiators und n für eine ganze Zahl im Bereich von 2 bis 10 stehen. In der Haftklebemasseschicht kann neben einem solchen Vinylaromatenblockcopolymer auch mindestens ein Metallkomplex mit einem substituierbaren Komplexbildner enthalten sein. Eine derartige Haftklebemasseschicht weist eine ausgezeichnete Temperaturstabilität auf. Insbesondere ist sie über einen weiten Temperaturbereich haftklebrig und weist auch bei hohen Temperaturen eine gute Verklebungsfestigkeit auf.

Kommerziell sind Vinylaromatenblockcopolymere zum Beispiel unter dem Namen Kraton der Fa. Kraton (Kraton D 1101 und 1102 als Styrol-Butadien-Styrol-Blockcopolymere, Kraton D 1107 oder 1163 als Styrol-Isopren-Styrol-Blockcopolymere oder Kraton G 1652 als hydriertes Styrol-Butadien-Styrol-Blockcopolymer), unter dem Namen Europrene der Fa. Polimeri Europa (Styrolblockcopolymere mit Isopren, Butadien oder deren Hydrierungsprodukten) oder unter dem Namen Septon der Fa. Kuraray (hydrierte Styrol-Isopren-Styrol-Blockcopolymere) bekannt. A-B-C-Vinylaromatenblockcopolymere sind z.B. unter dem Namen SBM von der Fa. Arkema erhältlich.

Sind im erfindungsgemäßen Haftklebstreifen ein oder mehrere Haftklebemasseschichten auf Basis von Vinylaromatenblockcopolymeren aufgebaut, so weisen die Blockcopolymere vorzugsweise einen Polyvinylaromatanteil von 10 Gew.-% bis 35 Gew.-% auf.

Ferner beträgt der Anteil der Vinylaromatenblockcopolymere in Summe bezogen auf die gesamte Haftklebmassenschicht vorzugsweise mindestens 20 Gew. %, bevorzugter mindestens 30 Gew.-%, weiter bevorzugt mindestens 35 Gew.-%. Ein zu geringer Anteil an Vinylaromatenblockcopolymeren hat zur Folge, dass die Kohäsion der Haftklebemasse relativ niedrig ist. Der maximale Anteil der Vinylaromatenblockcopolymere in Summe bezogen auf die gesamte Haftklebmassenschicht beträgt vorzugsweise maximal 80 Gew.-%, bevorzugter maximal 65 Gew.-%, ganz besonders bevorzugt maximal 60 Gew.-%. Ein zu hoher Anteil an Vinylaromatenblockcopolymeren hat wiederum zur Folge, dass die Haftklebemasse kaum noch haftklebrig ist.

In einer weiteren bevorzugten Ausgestaltung weisen die ein oder mehreren Haftklebemasseschichten auf Basis von Vinylaromatenblockcopolymer mindestens ein Klebharz auf, um die Adhäsion in gewünschter Weise zu erhöhen. Das Klebharz sollte mit dem Elastomerblock der Blockcopolymere verträglich sein. Vorzugsweise ist das Klebharz in den ein oder mehreren Haftklebemasseschichten in einem Anteil von 20 bis 60 Gew.-%, bevorzugt 30 bis 50 Gew.-% enthalten, jeweils bezogen auf das Gesamtgewicht der Haftklebemasseschicht.

Bevorzugt werden Klebharze mit einem DACP-Wert (diacetone alcohol cloud point) oberhalb von 30°C, insbesondere mit einem DACP-Wert oberhalb von 37°C, und einem MMAP-Wert (mixed methylcylohexane aniline point) von größer 50°C, insbesondere einem MMAP-Wert größer 60°C. Der DACP-Wert und der MMAP-Wert geben jeweils die Löslichkeit in einem bestimmten Lösemittel an. Durch die Auswahl dieser Bereiche wird eine besonders hohe Permeationsbarriere, insbesondere gegen Wasserdampf, erreicht.

Weiter bevorzugt sind Klebharze mit einer Erweichungstemperatur (Ring & Ball, nach ASTM E28) von mehr als 95 °C, insbesondere mehr als 100 °C. Durch diese Auswahl wird eine besonders hohe Permeationsbarriere, insbesondere gegen Sauerstoff, erreicht.

Als Klebharze können in der Haftklebemasseschicht zum Beispiel nicht hydrierte, partiell oder vollständig hydrierte Harze auf Basis von Kolophonium und Kolophoniumderivaten, hydrierte Polymerisate des Dicyclopentadiens, nicht hydrierte, partiell, selektiv oder vollständig hydrierte Kohlenwasserstoffharze auf Basis von C₅-, C₅/C₉- oder Cg-Monomerströmen, Polyterpenharze auf Basis von α-Pinen und/oder β-Pinen und/oder δ-Limonen, hydrierte Polymerisate von bevorzugt reinen C₈-und Cg-Aromaten eingesetzt wer-den. Vorgenannte Klebharze können sowohl allein als auch im Gemisch eingesetzt werden. Dabei können sowohl bei Raumtemperatur feste als auch flüssige Harze zum Einsatz kommen. Um eine hohe Alterungs- und UV-Stabilität zu gewährleisten sind hydrierte Harze mit einem Hydrierungsgrad von mindestens 90%, vorzugsweise von mindestens 95%, bevorzugt.

Bevorzugt wird eine strippfähige Haftklebemasseschicht eingesetzt, die aus einem Elastomerteil (a1), einem Klebharzteil (a2), optional einem Weichharzteil (a3) und optional weiteren Additiven (a4) besteht, wobei
- der Elastomerteil (a1) zu mindestens 90 Gew.-% aus Polyvinylaromaten-Polydien-Blockcopolymeren, insbesondere Polyvinylaromaten-Polybutadien-Blockcopolymeren besteht, der Gehalt an Polyvinylaromaten an den Polyvinylaromat-Polydien-Blockcopolymeren bei mindestens 12 Gew.-% und höchstens 35 Gew.-%, bevorzugt bei mindestens 20 Gew.-% und höchstens 32 Gew.-% liegt, und der Anteil des Elastomerteils (a1) bezogen auf die Gesamthaftklebemasse bei mindestens 40 Gew.-% und höchstens 55 Gew.-%, bevorzugt bei mindestens 45 Gew.-% liegt,
- der Klebharzteil (a2) zu mindestens 90 Gew.-%, bevorzugt zu mindestens 95 Gew.-% aus mit den Polydien-Blöcken im Wesentlichen verträglichen und mit den Polyvinylaromaten-Blöcken im Wesentlichen unverträglichen Kohlenwasserstoffharzen besteht und der Anteil des Klebharzteils (a2) bezogen auf die Gesamtklebemasse A bei mindestens 40 Gew.-% und höchstens 60 Gew.-% liegt,
- - der Weichharzteil (a3) bezogen auf die Gesamtklebemasse bei 0 Gew.-% bis höchstens 5 Gew.-% liegt.

Wenn die Summe der Gewichtsanteile aus Elastomerteil (a1), aus Klebharzteil (a2) und aus Weichharzteil (a3) nicht 100 Gew.-% ergibt, wird der verbleibende Rest an 100 Gew.-% durch die Additive (a4) gebildet.

In den ein oder mehreren Haftklebemasseschichten können weitere Additive enthalten sein, wie insbesondere:
- primäre Antioxidantien, wie zum Beispiel sterisch gehinderte Phenole, vorzugsweise mit einem Anteil von 0,2 bis 1 Gew.-% bezogen auf das Gesamtgewicht der Haftklebemasseschicht,
- sekundäre Antioxidantien, wie zum Beispiel Phosphite, Thioester oder Thioether, vorzugsweise mit einem Anteil von 0,2 bis 1 Gew.-% bezogen auf das Gesamtgewicht der Haftklebemasseschicht,
- Prozessstabilisatoren wie zum Beispiel C-Radikalfänger, vorzugsweise mit einem Anteil von 0,2 bis 1 Gew.-% bezogen auf das Gesamtgewicht der Haftklebemasseschicht,
- Lichtschutzmittel wie zum Beispiel UV-Absorber oder sterisch gehinderte Amine, vorzugsweise mit einem Anteil von 0,2 bis 1 Gew.-% bezogen auf das Gesamtgewicht der Haftklebemasseschicht,
- Verarbeitungshilfsmittel, vorzugsweise mit einem Anteil von 0,2 bis 1 Gew.-% bezogen auf das Gesamtgewicht der Haftklebemasseschicht,
- Endblockverstärkerharze, vorzugsweise mit einem Anteil von 0,2 bis 10 Gew.-% bezogen auf das Gesamtgewicht der Haftklebemasseschicht,
- Plastifizierungsmittel, wie zum Beispiel Weichmacheröle, oder niedermolekulare flüssige Polymere, wie zum Beispiel niedermolekulare Polybutene, und/oder
- gegebenenfalls weitere Polymere von bevorzugt elastomerer Natur; entsprechend nutzbare Elastomere beinhalten unter anderem solche auf Basis reiner Kohlenwasserstoffe, zum Beispiel ungesättigte Polydiene wie natürliches oder synthetisch erzeugtes Polyisopren oder Polybutadien, chemisch im wesentlichen gesättigte Elastomere wie zum Beispiel gesättigte Ethylen-Propylen-Copolymere, α-Olefincopolymere, Polyisobutylen, Butylkautschuk, Ethylen-Propylenkautschuk, sowie chemisch funktionalisierte Kohlenwasserstoffe wie zum Beispiel halogenhaltige, acrylathaltige, allyl- oder vinyletherhaltige Polyolefine, vorzugsweise mit einem Anteil von 0,2 bis 10 Gew.-% bezogen auf das Gesamtgewicht der Haftklebemasseschicht.

Mit "Endblockverstärkerharzen" sind erfindungsgemäß Harze gemeint, die mit den Endblöcken von gegebenenfalls in den Haftklebemasseschichten vorhandenen Blockcopolymeren wie insbesondere Vinylaromatenendblöcken verträglich sind, aber einen höheren Erweichungspunkt als die reinen Endblöcke besitzen. Mit Vinylaromaten(end)blöcken sind gemäß der vorliegenden Erfindung solche (End)Blöcke gemeint, die überwiegend gebildet sind von Vinylaromaten. Dadurch wird die Erweichungstemperatur der Haftklebemasse erhöht. Als Endblockverstärkerharze sind hauptsächlich aromatische C₈- und Cg-Harze bekannt, beschrieben wie zum Beispiel in der EP 1 013 733 B1, der WO 00/75247 A1, der EP 2 064 299 B1 oder der WO 08/042645 A1. Daneben kommen auch Polyphenylenoxide beziehungsweise Polyphenylenether zum Einsatz, beschrieben zum Beispiel in der WO 00/24840 A1 oder der WO 03/011954 A1. In der Regel besitzen Endblockverstärkerharze eine Erweichungstemperatur (Ring & Ball, nach ASTM E28) von mehr als 115 °C.

Die Art und Menge der Abmischkomponenten kann bedarfsweise ausgewählt werden. Wenn in den Haftklebemasseschichten Additive zum Einsatz kommen, die migrierfähig sind, dann werden vorzugsweise Additive gleicher Art in der Trägerschicht, falls vorhanden, ebenfalls eingesetzt.

In einer Ausführungsform des erfindungsgemäß eingesetzten Haftklebstreifens enthält die Haftklebemasseschicht auch weitere Additive, beispielhaft, aber nicht einschränkend erwähnt seien kristalline oder amorphe Oxide, Hydroxide, Carbonate, Nitride, Halogenide, Carbide oder gemischte Oxid-/Hydroxid-/Halogenidverbindungen des Aluminiums, Siliciums, Zirkoniums, Titans, Zinns, Zinks, Eisens oder der (Erd)alkalimetalle. Hierbei handelt es sich im Wesentlichen um Tonerden zum Beispiel Aluminiumoxide, Boehmit, Bayerit, Gibbsit, Diaspor und ähnliche.

Ganz besonders bevorzugt sind Schichtsilicate wie beispielsweise Bentonit, Montmorillonit, Hydrotalcit, Hectorit, Kaolinit, Boehmit, Glimmer, Vermiculit oder deren Mischungen. Aber auch Ruße oder weitere Modifikationen des Kohlenstoffs, etwa Kohlenstoffnanoröhrchen, können verwendet werden.

Die Haftklebemasseschichten können auch mit Farbstoffen oder Pigmenten eingefärbt sein. Die Klebemassen können weiß, schwarz oder farbig sein.

Die Beigabe von modifizierten Kieselsäuren, vorteilhaft von gefällten, mit Dimethyldichlorsilan oberflächenmodifizierten Kieselsäuren, wird bevorzugt genutzt, um die Wärmescherfestigkeit der Haftklebemasseschicht einzustellen.

Bevorzugt für die erfindungsgemäße Haftklebemasseschicht sind außerdem - unabhängig gewählt von anderen Additiven - Polymervollkugeln, Glashohlkugeln, Glasvollkugeln, keramische Hohlkugeln, keramische Vollkugeln und/oder Kohlenstoffvollkugeln ("Carbon Micro Balloons"). Weniger geeignet sind expandierbare oder expandierte Polymerhohlkugeln, da diese in der Regel nicht genügend wärmestabil sind.

Für die Verwendung in einer elektrochemischen Zelle oder einem Stapel von elektrochemischen Zellen ist für einige Verklebungen eine elektrisch leitfähige Haftklebemasseschicht erforderlich. Daher ist es bevorzugt, dass der für die Erfindung geeigneten strippfähigen Haftklebemasse leitfähige Füllstoffe zugesetzt sind. Diese können alle dem Fachmann geläufigen Füllstoffe sein, bevorzugt werden:
- Carbon Black-Graphit-Gemische
- Titannitrid
- Kohlenstoff-Nanofasern
- Silber- oder silberbeschichtete Partikel
sowie deren Kombinationen untereinander oder mit weiteren Leitstoffen.

Bevorzugt werden solche Leitstoffe, die keine Beeinträchtigung des in der elektrochemischen Zelle ggf. genutzten Katalysators verursachen, zum Beispiel des Platins. Weniger bevorzugt wird daher zum Beispiel Nickel, Kupfer und Eisen.

In einer weiteren Ausführung werden die erfindungsgemäß eingesetzten Haftklebemassen bevorzugt vor oder ggf. auch nach dem Auffließen auf die Oberfläche, beispielsweise eines Trägers oder Liners, vernetzt, wobei solche Vernetzungsgrade angestrebt werden, die weiterhin eine hohe Flexibilität und gute Haftung des Materials ermöglichen. Nach der Vernetzung weist die Haftklebemasse bevorzugt eine Reißdehnung von mindestens 20% und insbesondere von mindestens 100% auf. Eine derartige Reißdehnung ist besonders bevorzugt im Hinblick auf eine möglichst flexible Ausgestaltung der Haftklebemasse.

In einer bevorzugten Vorgehensweise wird die Haftklebemasse mit UV-Strahlung oder Elektronenstrahlen vernetzt. Eine ausführliche Beschreibung des Standes der Technik und die wichtigsten Verfahrensparameter bezüglich der Vernetzung sind dem Fachmann beispielsweise aus "Chemistry and Technology of UV and EB formulation for Coatings, Inks and Paints" (Vol. 1, 1991, SITA, London) bekannt. Zudem können auch andere Verfahren eingesetzt werden, die hochenergetische Bestrahlung ermöglichen.

Zur Verringerung der erforderlichen Strahlendosis können dem viskoelastischen Material Vernetzer und/oder Promotoren zur Vernetzung beigemischt werden, insbesondere durch UV-, Elektronenstrahlen- und/oder thermisch anregbare Vernetzer und/oder Promotoren. Geeignete Vernetzer für die Strahlenver-netzung sind Monomere oder Polymere die beispielsweise folgende funktionelle Gruppen beinhalten: Acrylat oder Methacrylat, Epoxid, Hydroxy, Carboxy, Vinyl, Vinylether, Oxetan, Thiol, Acetoacetat, Isocyanate, Allyl oder allgemein ungesättigte Verbindungen. Die eingesetzten Monomere oder Polymere können, je nach den Anforderungen an den Vernetzungsgrad di- oder multifunktionell sein.

In einer weiteren bevorzugten Auslegung werden die Haftklebemassen mit thermisch aktivierbaren Vernetzern vernetzt. Hierzu werden bevorzugt Peroxide, Säure- oder Säureanhydride, Metallchelate, bi- oder multifunktionelle Epoxide, bi- oder multifunktionelle Hydroxide sowie bi- oder multifunktionelle Isocyanate beigemischt, wie sie etwa für Säureanhydride in EP 1311559 B1 beschrieben werden.

Neben den monomeren Vernetzern mit den beschriebenen funktionellen Gruppen werden bevorzugt Vinylaromatenblockcopolymere eingesetzt, die mit diesen vernetzenden Gruppen funktionalisiert sind. Es werden vorteilhaft funktionalisierte Vinylaromatenblockcopolymere wie die Kraton FG-Serie (etwa Kraton FG 1901 oder Kraton FG 1924), Asahi Tuftec M 1913 bzw. Tuftec M 1943 oder Septon HG252 (SEEPS-OH) eingesetzt. Weitere bevorzugte Blockcopolymere sind zum Beispiel unter dem Namen Epofriend A 1005, A 1010 oder A 1020 der Firma Daicel erhältlich. Durch Zugabe geeigneter Vernetzungsagentien (zum Beispiel mehrwertige Isocyanate, Amine, Epoxide, Alkohole, Thiole, Phenole, Guanidine, Mercaptane Carbonsäuren bzw. Säureanhydride) können diese Blockcopolymere thermisch oder durch Strahlung vernetzt werden. Auch eine Kombination von säure- oder säureanhydridmodifizierten Vinylaromatenblockcopolymer (zum Beispiel Kraton FG-Serie) und einem epoxidierten Vinylaromatenblockcopolymer (zum Beispiel Daicel Epofriend-Serie) ist vorteilhaft nutzbar. Dadurch kann man eine Vernetzung ohne monomeren Vernetzer bewerkstelligen, wodurch auch bei unvollständiger Vernetzung keine monomeren Bestandteile übrig bleiben. Eine Mischung der funktionalisierten Monomere oder Polymere ist ebenfalls einsetzbar.

Für die Verwendung in einer elektrochemischen Zelle oder einem Stapel von elektrochemischen Zellen sind vernetzte strippfähige Haftklebemasseschichten gegenüber unvernetzten bevorzugt, da die vernetzten Haftklebemasseschichten den oberhalb der Raumtemperatur liegenden Betriebstemperaturen besser standhalten. Insbesondere bevorzugt sind Haftklebemasseschichten auf Basis von Vinylaromatenblockcopolymeren mit vernetzten Vinylaromatenendblöcken.

Für die Verwendung in platinkatalysierten elektrochemischen Zellen ist es darüber hinaus bevorzugt, dass die Haftklebemasse im Wesentlichen frei von Platingiften ist. Im Wesentlichen frei bedeutet dabei einen Massenanteil von weniger als 100 ppm je Substanz. Als Platingifte sind Arsen, Phosphor, Bor, Wismut, Silizium, Schwefel, Blei, Zink, Zinn, Antimon, Silber, Kupfer, Nickel und Eisen in ihrer elementaren oder ionischen Form bekannt.

Der erfindungsgemäß eingesetzte Haftklebstreifen kann ein oder mehrere Trägerschichten, d.h. Träger, umfassen. Die Dehnbarkeit des mindestens einen Trägers muss dabei ausreichend sein, um ein Ablösen des Haftklebstreifens durch dehnendes Verstrecken zu gewährleisten. Dementsprechend weist die Trägerschicht, falls vorhanden, in der Längsrichtung und/oder der Querrichtung, insbesondere in der Längsrichtung und der Querrichtung, vorzugsweise eine Reißdehnung von mindestens 100 %, bevorzugter von mindestens 300 %, noch bevorzugter von mindestens 400 % und insbesondere von mindestens 500 %, wie zum Beispiel von mindestens 600 %, auf.

Als Träger können zum Beispiel sehr dehnfähige Folien dienen. Beispiele für vorteilhaft einsetzbare dehnbare Träger sind transparente Ausführungen aus WO 2011/124782 A1, DE 10 2012 223670 A1, WO 2009/114683 A1, WO 2010/077541 A1, WO 2010/078396 A1.

Zur Herstellung der Trägerfolie werden filmbildende oder extrusionsfähige Polymere eingesetzt, die zusätzlich mono- oder biaxial orientiert sein können.

In einer bevorzugten Auslegung werden Polyolefine eingesetzt. Bevorzugte Polyolefine werden aus Ethylen, Propylen, Butylen und/oder Hexylen hergestellt, wobei jeweils die reinen Monomere polymerisiert werden können oder Mischungen aus den genannten Monomeren copolymerisiert werden. Durch das Polymerisationsverfahren und durch die Auswahl der Monomere lassen sich die physikalischen und mechanischen Eigenschaften der Polymerfolie steuern wie zum Beispiel die Erweichungstemperatur und/oder die Reißfestigkeit. Besonders bevorzugt sind Polyethylene niedriger Dichte, also mit einer Dichte von 0,94 g/cm³ oder weniger, da diese eine vergleichsweise geringe Wasserdampf- und Wasserstoffpermeabilität aufweisen.

Ferner lassen sich Polyurethane vorteilhaft als Ausgangsmaterialien für dehnbare Trägerschichten verwenden. Polyurethane sind chemisch und/oder physikalisch vernetzte Polykondensate, die typischerweise aus Polyolen und Isocyanaten aufgebaut werden. Je nach Art und Einsatzverhältnis der einzelnen Komponenten sind dehnbare Materialien erhältlich, die im Sinne dieser Erfindung vorteilhaft eingesetzt werden können. Rohstoffe, die dem Formulierer hierzu zur Verfügung stehen, sind zum Beispiel in 0894841 und 1308492 genannt. Dem Fachmann sind weitere Rohstoffe bekannt, aus denen erfindungsgemäße Trägerschichten aufgebaut werden können. Weiterhin ist es vorteilhaft, Kautschuk basierende Materialien in Trägerschichten einzusetzen, um Dehnbarkeit zu realisieren. Als Kautschuk oder Synthesekautschuk oder daraus erzeugten Verschnitten als Ausgangsmaterial für dehnbare Trägerschichten kann der Naturkautschuk grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylat-Kautschuke (ACM), der Ethylenvinylacetat-Copolymere (EVA) und der Polyurethane und/oder deren Verschnitten gewählt werden.

Besonders vorteilhaft einsetzbar als Materialien für dehnbare Trägerschichten sind Blockcopolymere. Dabei sind einzelne Polymerblöcke kovalent miteinander verknüpft. Die Blockverknüpfung kann in einer linearen Form vorliegen, aber auch in einer sternförmigen oder Pfropfcopolymervariante. Ein Beispiel für ein vorteilhaft einsetzbares Blockcopolymer ist ein lineares Triblockcopolymer, dessen zwei endständige Blöcke eine Erweichungstemperatur (Ring & Ball, nach ASTM E28) von mindestens 40 °C, bevorzugt mindestens 70 °C aufweisen und dessen Mittelblock einer Erweichungstemperatur (Ring & Ball, nach ASTM E28) von höchstens 0 °C, bevorzugt höchstens -30 °C aufweist. Höhere Blockcopolymere, etwa Tetrablockcopolymere sind ebenfalls einsetzbar. Wichtig ist, dass zumindest zwei Polymerblöcke gleicher oder verschiedener Art im Blockcopolymer enthalten sind, die eine Erweichungstemperatur (Ring & Ball, nach ASTM E28) jeweils von mindestens 40 °C, bevorzugt mindestens 70 °C aufweisen und die über zumindest einen Polymerblock mit einer Erweichungstemperatur (Ring & Ball, nach ASTM E28) von höchstens 0 °C, bevorzugt höchstens -30 °C in der Polymerkette voneinander separiert sind. Beispiele für Polymerblöcke sind Polyether wie zum Beispiel Polyethylenglykol, Polypropylenglykol oder Polytetrahydrofuran, Polydiene, wie zum Beispiel Polybutadien oder Polyisopren, hydrierte Polydiene, wie zum Beispiel Polyethylenbutylen oder Polyethylenpropylen, Polyester, wie zum Beispiel Polyethylenterephthalat, Polybutandioladipat oder Polyhexandioladipat, Polycarbonat, Polycaprolacton, Polymerblöcke vinylaromatischer Monomere, wie zum Beispiel Polystyrol oder Poly-[a]-Methylstyrol, Polyalkylvinylether, Polyvinylacetat, Polymerblöcke [α],[β]-ungesättigter Ester wie insbesondere Acrylate oder Methacrylate. Dem Fachmann sind entsprechende Erweichungstemperaturen bekannt. Alternativ schlägt er sie beispielsweise im Polymer Handbook [J. Brandrup, E. H. Immergut, E. A. Grulke (Hrsg.), Polymer Handbook, 4. Aufl. 1999, Wiley, New York] nach. Polymerblöcke können aus Copolymeren aufgebaut sein.

Zur Herstellung eines Trägermaterials kann es auch hier angebracht sein, Additive und weitere Komponenten hinzuzugeben, die die filmbildenden Eigenschaften verbessern, die Neigung zur Ausbildung von kristallinen Segmenten vermindern und/oder die mechanischen Eigenschaften gezielt verbessern oder auch gegebenenfalls verschlechtern.

Des Weiteren sind als Träger bahnförmige Schaumstoffe (beispielsweise aus Polyethylen und Polyurethan) geeignet.

Die Träger können mehrlagig ausgestaltet sein. Des Weiteren können die Träger Deckschichten aufweisen, beispielsweise Sperrschichten, die ein Eindringen von Komponenten aus der Klebemasse in den Träger oder umgekehrt unterbinden. Diese Deckschichten können auch Barriereeigenschaften haben, um so ein Durchdiffundieren von Wasserdampf, Wasserstoff und/oder Sauerstoff zu verhindern.

Bevorzugt ist der Träger im Wesentlichen frei von Platingiften. Im Wesentlichen frei bedeutet dabei einen Massenanteil von weniger als 100 ppm je Substanz. Als Platingifte sind Arsen, Phosphor, Bor, Wismut, Silizium, Schwefel, Blei, Zink, Zinn, Antimon, Silber, Kupfer, Nickel und Eisen in ihrer elementaren oder ionischen Form bekannt.

Zur besseren Verankerung der Haftklebemassen auf dem Träger können die Träger mit den bekannten Maßnahmen wie Corona, Plasma oder Flammen vorbehandelt werden. Auch die Nutzung eines Primers ist möglich. Idealerweise kann aber auf eine Vorbehandlung verzichtet werden. Die Rückseite des Trägers kann einer antiadhäsiven physikalischen Behandlung oder Beschichtung unterzogen sein.

Die Dicke der Trägerschicht, falls vorhanden, liegt üblicherweise im Bereich von 10 bis 200 µm, bevorzugt zwischen 20 und 100 µm.

Vorzugsweise sollte die Spannung des Trägers bei 50 % Dehnung in der Längsrichtung und/oder der Querrichtung, insbesondere in der Längsrichtung und der Querrichtung, kleiner als 20 N/mm² sein, bevorzugter kleiner als 10 N/mm², um ein einfaches Ablösen des Haftklebstreifens ohne allzu großen Kraftaufwand zu ermöglichen.

Die Herstellung und Verarbeitung der Haftklebemassen kann sowohl aus der Lösung als auch aus der Schmelze erfolgen. Das Aufbringen der Haftklebemassen auf die Trägerschicht kann durch direkte Beschichtung oder durch Laminierung, insbesondere Heißlaminierung erfolgen. Der vorzugsweise einschichtige Haftklebstreifen weist vorzugsweise eine Dicke auf von 20 µm bis 2000 µm, bevorzugter von 30 bis 1000 µm, besonders bevorzugt von 50 bis 600 µm, wie zum Beispiel etwa 250 µm auf. Bevorzugt ist außerdem eine Ausführungsform des Haftklebstreifens, bei dem der Träger eine Dicke zwischen 20 und 200 µm, vorzugsweise zwischen 100 µm und 200 µm, aufweist und die vorzugsweise identischen Haftklebemasseschichten, die auf den beiden Oberflächen des Trägers angeordnet sind, jeweils eine Dicke zwischen 20 und 200 µm, vorzugsweise zwischen 20 µm und 50 µm, aufweisen. Die Kombination eines Trägers mit einer Dicke von mehr als 100 µm mit Haftklebemasseschichten mit Dicken von weniger als 50 µm ist besonders vorteilhaft. Bei Auswahl wasserdampf- oder wasserstoffsperrender Materialien für den Träger lässt sich in diesem Fall ein besonders hoher sperrender Anteil der Querschnittfläche des Haftklebstreifens erzielen.

Die Haftklebstreifen wie vorstehend beschrieben werden erfindungsgemäß zum Verkleben von Komponenten in einer elektrochemischen Zelle oder in einem Stapel von mindestens zwei elektrochemischen Zellen gegeneinander verwendet.

Wie bereits vorstehend erläutert, handelt es sich bei der elektrochemischen Zelle vorzugsweise um eine Brennstoffzelle, bevorzugter um eine Brennstoffzelle mit Festelektrolytmembran, und insbesondere um eine Brennstoffzelle mit Polymerelektrolytmembran, und dementsprechend beim Stapel von elektrochemischen Zellen vorzugsweise um einen Stapel von Brennstoffzellen, bevorzugter von Brennstoffzellen mit Festelektrolytmembran, und insbesondere von Brennstoffzellen mit Polymerelektrolytmembran. Ein erfindungsgemäßer Stapel von elektrochemischen Zellen umfasst vorzugsweise mindestens 10, bevorzugter mindestens 20, noch bevorzugter mindestens 50 und insbesondere mindestens 100 elektrochemische Zellen.

Wenn solche Haftklebstreifen zum Verkleben von Komponenten in einer elektrochemischen Zelle oder einem Stapel von elektrochemischen Zellen verwendet werden, dann werden in der elektrochemischen Zelle bzw. im Stapel von elektrochemischen Zellen vorzugsweise folgende Komponenten mittels des Haftklebstreifens gegeneinander verklebt:
(a) Bipolarhalbplatten,
(b) (i) Membran-Elektroden-Einheiten und (ii) Bipolarplatten oder Bipolarhalbplatten,
(c) (i) Stromabnehmerplatten und (ii) Bipolarplatten oder Bipolarhalbplatten, und/oder
(d) (i) Stromabnehmerplatten und (ii) Isolierplatten oder Medienverteilerplatten.

Unter einer Medienverteilerplatte ist erfindungsgemäß eine Platte gemeint, über die die Medien wie insbesondere Verbrennungsgase, beispielsweise Wasserstoff und Sauerstoff, zugeführt werden. In einer elektrochemischen Zelle oder einem Stapel von elektrochemischen Zellen können die Isolierplatte und die Medienverteilerplatte ein und dieselbe Platte darstellen, wobei es sich dann um eine Platte handelt, die sowohl isolierend als auch medienverteilend ist. Alternativ können die Isolierplatte und die Medienverteilerplatte in der Zelle bzw. im Stapel nebeneinander vorliegen, d.h. separate Platten darstellen. Im letztgenannten Fall kann die Isolierplatte der Stromabnehmerplatte benachbart sein, gefolgt von der Medienverteilerplatte. Alternativ kann die Medienverteilerplatte der Stromabnehmerplatte benachbart sein, gefolgt von der Isolierplatte.

In einem erfindungsgemäßen Stapel von elektrochemischen Zellen schließen die elektrochemischen Zellen vorzugsweise auf beiden Seiten jeweils mit einer Bipolarhalbplatte ab. In diesem Fall sind die Bipolarhalbplatten der elektrochemischen Zellen vorzugsweise jeweils mittels eines Haftklebstreifens wie vorstehend definiert gegen die Bipolarhalbplatten der benachbarten elektrochemischen Zellen des Stapels verklebt. Dies ermöglicht einen bequemen Austausch von defekten elektrochemischen Zellen innerhalb des Stapels.

In einer Ausführungsform der erfindungsgemäßen elektrochemischen Zelle ist (i) die Membran-Elektroden-Einheit mittels jeweils eines Haftklebstreifens wie vorstehend definiert gegen (ii) die beiden benachbarten Bipolarhalbplatten oder Bipolarplatten verklebt. Dies ermöglicht den bequemen Austausch einer defekten Membran-Elektroden-Einheit innerhalb einer elektrochemischen Zelle. In einer entsprechenden Ausführungsform des erfindungsgemäßen Stapels von elektrochemischen Zellen sind (i) die Membran-Elektroden-Einheiten der Zellen jeweils mittels eines Haftklebstreifens wie vorstehend definiert gegen (ii) die beiden jeweils benachbarten Bipolarhalbplatten oder Bipolarplatten verklebt. Dies ermöglicht entsprechend den bequemen Austausch von defekten Membran-Elektroden-Einheiten innerhalb eines Stacks von elektrochemischen Zellen.

Allgemeiner formuliert sind in einer erfindungsgemäßen elektrochemischen Zelle oder in einem erfindungsgemäßen Stapel von elektrochemischen Zellen gemäß einer bevorzugten Ausführungsform mindestens drei aufeinander folgende Komponenten mittels eines Haftklebstreifens, so wie er vorstehend definiert ist, verklebt. Dementsprechend ist in einer erfindungsgemäßen elektrochemischen Zelle oder in einem erfindungsgemäßen Stapel vorzugsweise mindestens eine innenliegende Komponente mit den beiden benachbarten Komponenten mittels eines Haftklebstreifens, so wie er vorstehend definiert ist, verklebt. Somit lässt sich die entsprechende innenliegende Komponente, wenn sie defekt ist, bequem austauschen. Bei der innenliegenden Komponente kann es sich beispielsweise um die Membran-Elektroden-Einheit einer elektrochemischen Zelle oder um die Stromabnehmerplatten eines Stapels von elektrochemischen Zellen handeln.

In einer weiteren Ausführungsform der elektrochemischen Zelle oder des Stapels von elektrochemischen Zellen sind die endständigen Platten jeweils mittels eines Haftklebstreifens, so wie er vorstehend definiert ist, gegen die benachbarten Platten verklebt. Auch dies ermöglicht einen bequemen Austausch von defekten Komponenten, nämlich von defekten endständigen Platten.

Anhand der nachfolgend beschriebenen Figuren sowie der nachfolgend beschriebenen Beispiele werden besonders vorteilhafte Ausführungen der Erfindung näher erläutert, ohne damit die Erfindung unnötig einschränken zu wollen.

### Figuren

Es zeigen
Fig. 1 einen erfindungsgemäß einsetzbaren dreischichtigen Haftklebstreifen in Form eines rahmenförmigen Stanzlings (dreidimensionale Zeichnung).
Fig. 2 einen erfindungsgemäß einsetzbaren einschichtigen Haftklebstreifen in Form eines rahmenförmigen Stanzlings (dreidimensionale Zeichnung).
Fig. 3 eine Membran-Elektroden-Einheit, die beidseits mit jeweils einer Bipolarhalbplatte erfindungsgemäß verklebt ist (dreidimensionale Zeichnung).

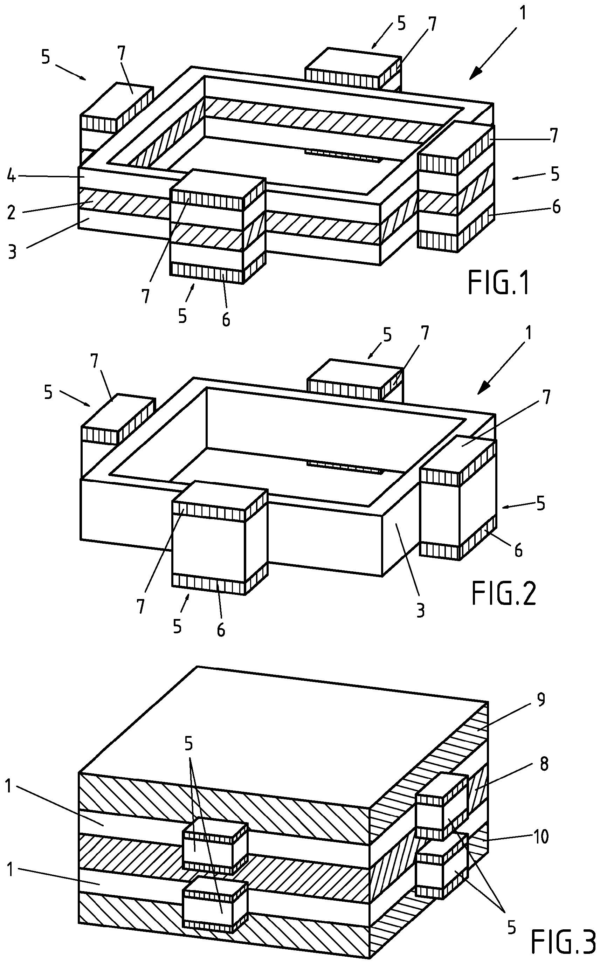

In der Fig. 1 ist der erfindungsgemäß einsetzbare Haftklebstreifen 1 aus drei Schichten 2, 3, 4 gezeigt, der sich durch dehnendes Verstrecken im Wesentlichen in der Verklebungsebene rückstands- und zerstörungsfrei wieder ablösen lässt. Die Trägerschicht 2 ist einschichtig ausgeführt. Auf der Trägerschicht 2 sind beidseitig Haftklebemasseschichten 3, 4 angeordnet, die eine äußere obere und eine äußere untere Fläche des Haftklebstreifens 1 bilden. Der Haftklebstreifen 1 ist auf einen rahmenförmigen Klebebandabschnitt (Stanzling) zugeschnitten. Der Haftklebstreifen 1 weist ferner jeweils einen hervorstehenden nicht haftklebrigen Anfasserbereich 5 pro Seite auf, von welchem aus der Ablöseprozess durch dehnendes Verstrecken im Wesentlichen in der Verklebungszone ausgeführt werden kann. Bei den Anfasserbereichen 5 handelt es sich jeweils um eine Fortpflanzung der Schichtenfolge des Haftklebstreifens 1, wobei in den Anfasserbereichen 5 auf der einen äußeren oberen und der einen äußeren unteren Fläche des Haftklebstreifens 1 jeweils eine antiadhäsive Schicht 6 bzw. 7, vorzugsweise in Form einer beidseitig silikonisierten Trennfolie 6 bzw. 7, angeordnet ist, um die Anfasserbereiche 5 nicht haftklebrig auszurüsten.

In der Fig. 2 ist der erfindungsgemäß einsetzbare Haftklebstreifen 1 aus einer einzigen Haftklebemasseschicht 3 gezeigt, der sich durch dehnendes Verstrecken im Wesentlichen in der Verklebungsebene rückstands- und zerstörungsfrei wieder ablösen lässt. Der Haftklebstreifen 1 ist auf einen rahmenförmigen Klebebandabschnitt (Stanzling) zugeschnitten. Der Haftklebstreifen 1 weist ferner jeweils einen hervorstehenden nicht haftklebrigen Anfasserbereich 5 pro Seite auf, von welchem aus der Ablöseprozess durch dehnendes Verstrecken im Wesentlichen in der Verklebungszone ausgeführt werden kann. Bei den Anfasserbereichen 5 handelt es sich jeweils um eine Fortpflanzung der Haftklebstreifens 1 aus einer einzigen Haftklebemasseschicht 3, wobei in den Anfasserbereichen 5 auf der einen äußeren oberen und der einen äußeren unteren Fläche des Haftklebstreifens 1 jeweils eine antiadhäsive Schicht 6 bzw. 7, vorzugsweise in Form einer beidseitig silikonisierten Trennfolie 6 bzw. 7, angeordnet ist, um die Anfasserbereiche 5 nicht haftklebrig auszurüsten.

In der Fig. 3 ist ein Verbund aus einer rechteckigen Membran-Elektroden-Einheit 8 und zwei rechteckigen Bipolarhalbplatten 9 und 10 gezeigt, wobei die Membran-Elektroden-Einheit 8 an ihrer Randverstärkung beidseits mit jeweils einer der Bipolarhalbplatten 9 bzw. 10 mittels des erfindungsgemäß einsetzbaren einschichtigen Haftklebstreifens (Stanzlings) 1 mit Anfasserbereichen 5 wie in Fig. 2 beschrieben verklebt ist.

### Beispiele

Ein Haftklebstreifen, der sich durch dehnendes Verstrecken im Wesentlichen in der Verklebungsebene rückstands- und zerstörungsfrei wieder ablösen lässt, bestehend aus einer einzigen Haftklebemasseschicht auf Basis von nicht hydriertem Styrolblockcopolymer wurde mittels Laser auf zwei rahmenförmige Klebebandabschnitte (Stanzlinge) zugeschnitten. Damit wurde eine rechteckige Membran-Elektroden-Einheit an ihrer Randverstärkung auf beiden Seiten mit jeweils einer rechteckigen Bipolarhalbplatte verklebt. Die Stanzlinge wurden derart ausgestaltet, dass sie mehrere über die letztlich verklebten Oberflächen der Komponenten hervorstehende Anfasserbereiche aufwiesen, und zwar jeweils einen Anfasserbereich pro verklebter Seite, von welchen aus der Ablöseprozess durch dehnendes Verstrecken im Wesentlichen in der Verklebungszone ausgeführt werden konnte. Bei den Anfasserbereichen handelte es sich jeweils um eine Fortpflanzung des Haftklebstreifens aus einer einzigen Haftklebemasseschicht, wobei in den Anfasserbereichen auf der einen äußeren oberen und der einen äußeren unteren Fläche des Haftklebstreifens (i) jeweils keine antiadhäsive Schicht angeordnet war (Beispiel 1 mit haftklebrigen Anfasserbereichen) oder (ii) jeweils eine antiadhäsive Schicht in Form einer beidseitig silikonisierten Trennfolie angeordnet war (Beispiel 2 mit nicht haftklebrigen Anfasserbereichen).

Anschließend wurden die Komponentenverbunde aus den Beispielen 1 und 2 jeweils wie folgt getestet. Es wurde erfolgreich auf Dichtigkeit der Verklebungen durch Beaufschlagung mit 1,5 bar Wasserdruck im inneren der verklebten Platten getestet. Es trat kein Wasser aus. Ferner konnten die beiden Verklebungen durch dehnendes Verstrecken der Haftklebstreifen (jeweils ausgehend von einem der Anfasserbereiche) im Wesentlichen in der Verklebungsebene leicht gelöst werden, wodurch die Membran-Elektroden-Einheit bequem ausgetauscht werden konnte. Die Bipolarhalbplatten und die Membran-Elektroden-Einheit blieben dabei unbeschädigt. Ferner waren an den vormals verklebten Oberflächen der genannten Komponenten keine Klebstoffrückstände zu sehen. Die genannten Komponenten konnten somit problemlos wieder wie vorher jeweils mit einem Stanzling des strippfähigen Haftklebstreifens verklebt werden, wobei auch der sich dabei ergebende Komponentenverbund den Test auf Dichtigkeit der Verklebungen wie vorstehend beschrieben bestand.

### Prüfmethoden

Alle Messungen wurden, sofern nichts anderes angegeben ist, bei 23 °C und 50 % rel. Luftfeuchtigkeit durchgeführt.

Die mechanischen und klebtechnischen Daten wurden wie folgt ermittelt:

### Reißdehnung, Reißfestigkeit und Spannung bei 50% Dehnung

Die Reißdehnung, die Reißfestigkeit (Reißkraft) und die Spannung bei 50% Dehnung wurden in Anlehnung an DIN 53504 unter Verwendung von Schulterstäben der Größe S3 bei einer Separationsgeschwindigkeit von 300 mm pro Minute gemessen. Das Prüfklima betrug 23 °C und 50 % rel. Luftfeuchtigkeit.

### Ablösekraft

Die Ablösekraft (Strippkraft bzw. Strippspannung) wurde unter Verwendung eines Haftklebstreifens mit den Abmessungen 50 mm Länge x 20 mm Breite mit einem am oberen Ende nicht haftklebrigem Anfasserbereich ermittelt. Der Haftklebstreifen wurde zwischen zwei deckungsgleich zueinander angeordneten Stahlplatten mit einer Abmessung von 50 mm x 30 mm mit einem Anpressdruck von jeweils 50 Newton verklebt. Die Stahlplatten haben an ihrem unteren Ende je eine Bohrung zur Aufnahme eines S-förmigen Stahlhakens. Das untere Ende des Stahlhakens trägt eine weitere Stahlplatte, über welche die Prüfanordnung zur Messung in der unteren Klemmbacke einer Zugprüfmaschine fixiert werden kann. Die Verklebungen wurden für eine Dauer von 24 Stunden bei +40 °C gelagert. Nach der Rekonditionierung auf Raumtemperatur wurde der Haftklebstreifen mit einer Zuggeschwindigkeit von 1000 mm pro Minute parallel zur Verklebungsebene und kontaktfrei zu den Kantenbereichen der beiden Stahlplatten herausgelöst. Dabei wurde die erforderliche Ablösekraft in Newton (N) gemessen. Angegeben wird der Mittelwert der Strippspannungswerte (in N pro mm²), gemessen in dem Bereich, in welchem der Haftklebstreifen auf einer Verklebungslänge zwischen 10 mm und 40 mm von den Stahluntergründen abgelöst ist.

### Klebkraft

Die Bestimmung der Klebkraft (gemäß AFERA 5001) wurde wie folgt durchgeführt. Als definierter Haftgrund wurde galvanisch verzinktes Stahlblech mit einer Stärke von 2 mm (Bezug von der Firma Rocholl GmbH) eingesetzt. Der zu untersuchende Haftklebstreifen wurde auf eine Breite von 20 mm und eine Länge von etwa 25 cm zugeschnitten, mit einem Handhabungsabschnitt versehen und unmittelbar danach fünfmal mit einer Stahlrolle von 4 kg bei einem Vorschub von 10 m/min auf den gewählten Haftgrund aufgedrückt. Unmittelbar im Anschluss daran wurde der Haftklebstreifen in einem Winkel von 180° vom Haftgrund mit einem Zugprüfungsgerät (Firma Zwick) mit einer Geschwindigkeit v = 300mm/min abgezogen und die hierfür bei Raumtemperatur benötigte Kraft gemessen. Der Messwert (in N/cm) ergibt sich als Mittelwert aus drei Einzelmessungen.

### DACP

In ein trockenes Probenglas werden 5,0 g Testsubstanz (das zu untersuchende Klebharzmuster) eingewogen und mit 5,0 g Xylol (Isomerengemisch, CAS [1330-20-7], ≥ 98,5%, Sigma-Aldrich #320579 oder vergleichbar) versetzt. Bei 130 °C wird die Testsubstanz gelöst und sodann auf 80 °C abgekühlt. Etwaig entwichenes Xylol wird durch weiteres Xylol aufgefüllt, so dass wieder 5,0 g Xylol vorhanden sind. Anschließend werden 5,0 g Diacetonalkohol (4-Hydroxy-4-methyl-2-pentanon, CAS [123-42-2], 99%, Aldrich #H41544 oder vergleichbar) zugegeben. Das Probenglas wird geschüttelt, bis sich die Testsubstanz komplett aufgelöst hat. Hierzu wird die Lösung auf 100 °C aufgeheizt. Das Probenglas mit der Harzlösung wird anschließend in ein Trübungspunktmessgerät Chemotronic Cool der Fa. Novomatics eingebracht und dort auf 110 °C temperiert. Mit einer Kühlrate von 1,0 K/min wird abgekühlt. Der Trübungspunkt wird optisch detektiert. Dazu wird diejenige Temperatur registriert, bei der die Trübung der Lösung 70 % beträgt. Das Ergebnis wird in °C angegeben. Je geringer der DACP-Wert desto höher ist die Polarität der Testsubstanz.

### MMAP

In ein trockenes Probenglas werden 5,0 g Testsubstanz (das zu untersuchende Klebharzmuster) eingewogen und mit 10 mL trockenem Anilin (CAS [62-53-3], ≥ 99,5%, Sigma-Aldrich #51788 oder vergleichbar) und 5 mL trockenem Methylcyclohexan (CAS [108-87-2], ≥ 99%, Sigma-Aldrich #300306 oder vergleichbar) versetzt. Das Probenglas wird geschüttelt, bis sich die Testsubstanz komplett aufgelöst hat. Hierzu wird die Lösung auf 100 °C aufgeheizt. Das Probenglas mit der Harzlösung wird anschließend in ein Trübungspunktmessgerät Chemotronic Cool der Fa. Novomatics eingebracht und dort auf 110 °C temperiert. Mit einer Kühlrate von 1,0 K/min wird abgekühlt. Der Trübungspunkt wird optisch detektiert. Dazu wird diejenige Temperatur registriert, bei der die Trübung der Lösung 70 % beträgt. Das Ergebnis wird in °C angegeben. Je geringer der MMAP-Wert desto höher ist die Aromatizität der Testsubstanz.

### Erweichungstemperatur

Die Erweichungstemperatur, insbesondere Harzerweichungstemperatur, wird nach der einschlägigen Methodik durchgeführt, die als Ring & Ball bekannt ist und nach ASTM E28 standardisiert ist.

Zur Bestimmung kommt ein Ring-Kugel-Automat HRB 754 der Firma Herzog zum Einsatz. Muster, insbesondere Harzmuster, werden zunächst fein gemörsert. Das resultierende Pulver wird in einen Messingzylinder mit Bodenöffnung (Innendurchmesser am oberen Teil des Zylinders 20 mm, Durchmesser der Bodenöffnung des Zylinders 16 mm, Höhe des Zylinders 6 mm) gefüllt und auf einem Heiztisch geschmolzen. Die Befüllmenge wird so gewählt, dass das zu prüfende Muster nach dem Schmelzen den Zylinder ohne Überstand voll ausfüllt.

Der resultierende Probekörper wird samt Zylinder in die Probehalterung des HRB 754 eingelegt. Zur Befüllung des Temperierbads wird typischerweise Glycerin oder Wasser verwendet. Die Prüfkugeln haben einen Durchmesser von 9,5 mm und wiegen 3,5 g. Entsprechend der HRB 754 Prozedur wird die Kugel oberhalb des Probekörpers im Temperierbad angeordnet und auf dem Probekörper abgelegt. 25 mm unter dem Zylinderboden befindet sich eine Auffangplatte, 2 mm über dieser eine Lichtschranke. Während des Messvorgangs wird die Temperatur mit 5 °C/min erhöht. Im Temperaturbereich der Erweichungstemperatur beginnt sich die Kugel durch die Bodenöffnung des Zylinders zu bewegen, bis sie schließlich auf der Auffangplatte zum Stehen kommt. In dieser Position wird sie von der Lichtschranke detektiert und zu diesem Zeitpunkt die Temperatur des Temperierbads registriert. Es findet eine Doppelbestimmung statt. Die Erweichungstemperatur ist der Mittelwert aus den beiden Einzelmessungen.

### Glasübergangstemperatur (T_{g})

Glasübergangspunkte - synonym als Glasübergangstemperaturen bezeichnet - werden angegeben als Ergebnis von Messungen mittels Dynamischer Differenzkalorimetrie DDK (englisch Dynamic Scanning Calorimetry; DSC) gemäß der DIN 53 765; insbesondere Abschnitte 7.1 und 8.1, jedoch mit einheitlichen Heiz- und Kühlraten von 10 K/min in allen Heiz- und Kühlschritten (vergleiche DIN 53 765; Abschnitt 7.1; Anmerkung 1). Die Probeneinwaage beträgt 20 mg.

### Dicke

Die Dicke einer Haftklebemasseschicht oder eines Haftklebstreifens kann durch Bestimmung der Dicke eines bezüglich seiner Länge und seiner Breite definierten Abschnitts einer solchen auf einen Träger aufgetragenen Haftklebemasseschicht bzw. eines solchen auf einen Träger aufgetragenen Haftklebstreifens bestimmt werden, abzüglich der (bekannten oder separat ermittelbaren) Dicke eines Abschnitts gleicher Dimensionen des verwendeten Trägers. Die Dicke der Haftklebemasseschicht bzw. des Haftklebstreifens lässt sich über handelsübliche Dickenmessgeräte (Taster-Prüfgeräte) mit Genauigkeiten von weniger als 1 µm Abweichung ermitteln. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen.

Wie bereits die Dicke einer Haftklebemasseschicht bzw. eines Haftklebstreifens lässt sich auch die Dicke eines Trägers über handelsübliche Dickenmessgeräte (Taster-Prüfgeräte) mit Genauigkeiten von weniger als 1 µm Abweichung ermitteln. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen.

### Dichte

Die Dichte eines Trägers wird ermittelt durch Quotientenbildung aus Masse und Dicke des Trägers. Hierzu wird die Masse eines bezüglich seiner Länge und seiner Breite definierten Abschnitts des Trägers bestimmt. Ferner wird die Dicke des Trägers mit den gleichen Dimensionen über ein handelsübliches Dickenmessgerät (Taster-Prüfgeräte) mit einer Genauigkeit von weniger als 1 µm Abweichung ermittelt. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen.

## Patentansprüche

1. Elektrochemische Zelle oder Stapel von mindestens zwei elektrochemischen Zellen, wobei mindestens zwei Komponenten der elektrochemischen Zelle oder des Stapels von elektrochemischen Zellen mittels eines Haftklebstreifens gegeneinander verklebt sind, der sich durch dehnendes Verstrecken im Wesentlichen in der Verklebungsebene wieder ablösen lässt, wobei der Haftklebstreifen eine oder mehrere Haftklebemasseschichten und gegebenenfalls eine oder mehrere Trägerschichten umfasst, und wobei die eine äußere obere und eine äußere untere Fläche des Haftklebstreifens von der oder den Haftklebemasseschichten gebildet sind.

2. Elektrochemische Zelle oder Stapel von elektrochemischen Zellen nach Anspruch 1, **dadurch gekennzeichnet, dass**
der Haftklebstreifen sich durch dehnendes Verstrecken im Wesentlichen in der Verklebungsebene rückstands- und zerstörungsfrei wieder ablösen lässt.

3. Elektrochemische Zelle oder Stapel von elektrochemischen Zellen nach Anspruch 1 oder 2, **dadurch gekennzeichnet, dass**
der Haftklebstreifen aus einer einzigen Haftklebemasseschicht besteht.

4. Elektrochemische Zelle oder Stapel von elektrochemischen Zellen nach Anspruch 1 oder 2, **dadurch gekennzeichnet, dass**
der Haftklebstreifen eine Trägerschicht und zwei Haftklebemasseschichten umfasst, wobei die beiden Haftklebemasseschichten auf den gegenüber liegenden Oberflächen der Trägerschicht angeordnet sind und die eine äußere obere und eine äußere untere Fläche des Haftklebstreifens bilden.

5. Elektrochemische Zelle oder Stapel von elektrochemischen Zellen nach einem der vorhergehenden Ansprüche,
**dadurch gekennzeichnet, dass**
der Haftklebstreifen mindestens eine Haftklebemasseschicht auf Basis von Vinylaromatenblockcopolymer umfasst.

6. Elektrochemische Zelle oder Stapel von elektrochemischen Zellen nach Anspruch 5, **dadurch gekennzeichnet, dass**
die Vinylaromatenblockcopolymere Polymerblöcke (i) überwiegend gebildet von Vinylaromaten (A-Blöcke), bevorzugt Styrol, und gleichzeitig (ii) solche überwiegend gebildet durch Polymerisation von 1,3-Dienen (B-Blöcke), wie zum Beispiel Butadien, Isopren oder einer Mischung aus den beiden Monomeren, oder von Butylenen (B-Blöcke), wie zum Beispiel Isobutylen, enthalten.

7. Elektrochemische Zelle oder Stapel von elektrochemischen Zellen nach Anspruch 5 oder 6, **dadurch gekennzeichnet, dass**
die mindestens eine Haftklebemasseschicht auf Basis von Vinylaromatenblockcopolymer und Klebharz aufgebaut ist, wobei vorzugsweise ein Klebharz gewählt wird, das einen DACP von größer 30 °C, bevorzugt größer 37 °C, und einen MMAP von größer 50 °C, bevorzugt größer 60 °C, aufweist und/oder das eine Erweichungstemperatur von größer 95 °C, vorzugsweise größer 100 °C, aufweist.

8. Elektrochemische Zelle oder Stapel von elektrochemischen Zellen nach einem der vorhergehenden Ansprüche,
**dadurch gekennzeichnet, dass**
der Haftklebstreifen mindestens eine Haftklebemasseschicht auf Basis von zumindest einem Blockcopolymer umfasst, das zumindest teilweise aus (Meth-)Acrylsäurederivaten aufgebaut ist, wobei das Blockcopolymer mindestens die Einheit P(A)-P(B)-P(A) aus wenigstens einem Polymerblock P(B) und wenigstens zwei Polymerblöcken P(A) aufweist, und wobei
- P(A) unabhängig voneinander Homo- oder Copolymerblöcke aus Monomeren A repräsentieren, wobei die Polymerblöcke P(A) jeweils eine Erweichungstemperatur im Bereich von +20°C bis +175°C aufweisen,
- P(B) einen Homo- oder Copolymerblock aus Monomeren B repräsentiert, wobei der Polymerblock P(B) eine Erweichungstemperatur im Bereich von -100°C bis +10°C aufweist, und
- die Polymerblöcke P(A) und P(B) nicht homogen miteinander mischbar sind.

9. Elektrochemische Zelle oder Stapel von elektrochemischen Zellen nach einem der vorhergehenden Ansprüche,
**dadurch gekennzeichnet, dass**
der Haftklebstreifen mindestens eine Haftklebemasseschicht auf Basis von Polyisobutylen-Homopolymer und/oder Polyisobutylen-Copolymer umfasst, vorzugsweise auf Basis von Polyisobutylen-Blockcopolymer.

10. Elektrochemische Zelle oder Stapel von elektrochemischen Zellen nach einem der vorhergehenden Ansprüche,
**dadurch gekennzeichnet, dass**
der Haftklebstreifen mindestens eine Haftklebemasseschicht auf Basis von festem Acrylnitril-Butadien-Kautschuk umfasst, die ferner Klebharz enthält, wobei der Anteil an Klebharz bei insgesamt 30 bis 130 phr liegt.

11. Elektrochemische Zelle oder Stapel von elektrochemischen Zellen nach einem der vorhergehenden Ansprüche,
**dadurch gekennzeichnet, dass**
der Haftklebstreifen mindestens eine Haftklebemasseschicht umfasst, die vernetzt ist, wobei die Haftklebemasseschicht vorzugsweise eine Haftklebemasseschicht auf Basis von Vinylaromatenblockcopolymer mit vernetzten Vinylaromatenendblöcken ist.

12. Elektrochemische Zelle oder Stapel von elektrochemischen Zellen nach einem der vorhergehenden Ansprüche,
**dadurch gekennzeichnet, dass**
der Haftklebstreifen mindestens eine Haftklebemasseschicht umfasst, in der modifizierte Kieselsäure enthalten ist, vorzugsweise gefällte, mit Dimethyldichlorsilan oberflächenmodifizierte Kieselsäure.

13. Elektrochemische Zelle oder Stapel von elektrochemischen Zellen nach einem der Ansprüche 5 bis 12,
**dadurch gekennzeichnet, dass**
der Haftklebstreifen mindestens eine Haftklebemasseschicht umfasst, die Endblockverstärkerharze enthält, die mit den in der Haftklebemasseschicht vorhandenen Vinylaromatenendblöcken verträglich sind, aber einen höheren Erweichungspunkt als die reinen Endblöcke besitzen, wodurch die Erweichungstemperatur der Haftklebemasse erhöht wird, wobei die Endblockverstärkerharze vorzugsweise mit einem Anteil von 0,2 bis 10 Gew.-% bezogen auf das Gesamtgewicht der Haftklebemasseschicht vorliegen.

14. Elektrochemische Zelle oder Stapel von elektrochemischen Zellen nach einem der vorhergehenden Ansprüche,
**dadurch gekennzeichnet, dass**
die Trägerschicht des Haftklebstreifens, falls vorhanden, in der Längsrichtung und/oder der Querrichtung, insbesondere in der Längsrichtung und der Querrichtung, eine Reißdehnung von mindestens 100 %, vorzugsweise von mindestens 300 %, bevorzugter von mindestens 400% und insbesondere von mindestens500 %, wie zum Beispiel von mindestens 600 %, aufweist.

15. Elektrochemische Zelle oder Stapel von elektrochemischen Zellen nach einem der vorhergehenden Ansprüche,
**dadurch gekennzeichnet, dass** die Trägerschicht des Haftklebstreifens, falls vorhanden, aus Polyethylen mit einer Dichte von 0,94 g/cm³ oder weniger ist.

16. Elektrochemische Zelle oder Stapel von elektrochemischen Zellen nach einem der vorhergehenden Ansprüche,
**dadurch gekennzeichnet, dass**
die ein oder mehreren Haftklebemasseschichten und, falls vorhanden, die ein oder mehreren Trägerschichten im Wesentlichen frei von Platingiften sind.

17. Elektrochemische Zelle oder Stapel von elektrochemischen Zellen nach einem der vorhergehenden Ansprüche,
**dadurch gekennzeichnet, dass**
der Haftklebstreifen derart ausgestaltet ist, dass die mindestens zwei Komponenten der elektrochemischen Zelle oder des Stapels von elektrochemischen Zellen mittels des Haftklebstreifens vollflächig gegeneinander verklebt sind.

18. Elektrochemische Zelle oder Stapel von elektrochemischen Zellen nach einem der Ansprüche 1 bis 16,
**dadurch gekennzeichnet, dass**
der Haftklebstreifen derart ausgestaltet ist, dass die mindestens zwei Komponenten der elektrochemischen Zelle oder des Stapels von elektrochemischen Zellen mittels des Haftklebstreifens teilflächig gegeneinander verklebt sind, wobei der Haftklebstreifen vorzugsweise (i) als Stanzling vorliegt, der eine Verklebung am Umfang der Komponenten bewirkt, und/oder (ii) mindestens eine Perforation aufweist.

19. Elektrochemische Zelle oder Stapel von elektrochemischen Zellen nach einem der vorhergehenden Ansprüche,
**dadurch gekennzeichnet, dass**
der Haftklebstreifen derart ausgestaltet ist, dass er mindestens einen über die zu verklebenden Oberflächen der mindestens zwei Komponenten hervorstehenden vorzugsweise nicht haftklebrigen Anfasserbereich aufweist, von welchem aus der Ablöseprozess durch dehnendes Verstrecken ausgeführt werden kann.

20. Elektrochemische Zelle oder Stapel von elektrochemischen Zellen nach Anspruch 19, **dadurch gekennzeichnet, dass**
der Anfasserbereich des Haftklebstreifens nicht haftklebrig ist, wobei es sich beim Anfasserbereich vorzugsweise
(i) um eine Fortpflanzung der optional vorhandenen Trägerschicht handelt, oder
(ii) um eine Fortpflanzung der Schichtenfolge des Haftklebstreifens handelt, wobei im Anfasserbereich auf der einen äußeren oberen und der einen äußeren unteren Fläche des Haftklebstreifens unabhängig voneinander jeweils eine antiadhäsive Schicht angeordnet ist.

21. Elektrochemische Zelle oder Stapel von elektrochemischen Zellen nach einem der vorhergehenden Ansprüche,
**dadurch gekennzeichnet, dass**
es sich bei der elektrochemischen Zelle um eine Brennstoffzelle, vorzugsweise um eine Brennstoffzelle mit Festelektrolytmembran, insbesondere um eine Brennstoffzelle mit Polymerelektrolytmembran handelt, oder dass
es sich beim Stapel von elektrochemischen Zellen um einen Stapel von Brennstoffzellen, vorzugsweise von Brennstoffzellen mit Festelektrolytmembran, insbesondere von Brennstoffzellen mit Polymerelektrolytmembran handelt.

22. Elektrochemische Zelle oder Stapel von elektrochemischen Zellen nach einem der vorhergehenden Ansprüche,
**dadurch gekennzeichnet, dass**
in der elektrochemischen Zelle bzw. im Stapel von elektrochemischen Zellen folgende Komponenten mittels des Haftklebstreifens gegeneinander verklebt sind:
(a) Bipolarhalbplatten,
(b) (i) Membran-Elektroden-Einheiten und (ii) Bipolarplatten oder Bipolarhalbplatten,
(c) (i) Stromabnehmerplatten und (ii) Bipolarplatten oder Bipolarhalbplatten, und/oder
(d) (i) Stromabnehmerplatten und (ii) Isolierplatten oder Medienverteilerplatten.

23. Verwendung eines Haftklebstreifens wie in einem der Ansprüche 1 bis 16 definiert zum Verkleben von Komponenten in einer elektrochemischen Zelle oder in einem Stapel von mindestens zwei elektrochemischen Zellen gegeneinander, wobei es sich bei der elektrochemischen Zelle vorzugsweise um eine Brennstoffzelle, bevorzugter um eine Brennstoffzelle mit Festelektrolytmembran, insbesondere um eine Brennstoffzelle mit Polymerelektrolytmembran handelt, oder wobei es sich beim Stapel von elektrochemischen Zellen vorzugsweise um einen Stapel von Brennstoffzellen, bevorzugter von Brennstoffzellen mit Festelektrolytmembran, insbesondere von Brennstoffzellen mit Polymerelektrolytmembran handelt.

24. Verwendung nach Anspruch 23,
**dadurch gekennzeichnet, dass**
die elektrochemische Zelle oder der Stapel von elektrochemischen Zellen nach dem Verkleben betrieben wird und anschließend der Haftklebstreifen durch dehnendes Verstrecken im Wesentlichen in der Verklebungsebene rückstands- und zerstörungsfrei wieder abgelöst wird.

25. Verwendung eines Haftklebstreifens wie in einem der Ansprüche 1 bis 16 definiert beim Verkleben von Komponenten in einer elektrochemischen Zelle oder in einem Stapel von mindestens zwei elektrochemischen Zellen gegeneinander zur Erzielung von insbesondere rückstands- und zerstörungsfreier Wiederablösbarkeit des Haftklebstreifens durch dehnendes Verstrecken des Haftklebstreifens im Wesentlichen in der Verklebungsebene, wobei es sich bei der elektrochemischen Zelle vorzugsweise um eine Brennstoffzelle, bevorzugter um eine Brennstoffzelle mit Festelektrolytmembran, insbesondere um eine Brennstoffzelle mit Polymerelektrolytmembran handelt, oder wobei es sich beim Stapel von elektrochemischen Zellen vorzugsweise um einen Stapel von Brennstoffzellen, bevorzugter von Brennstoffzellen mit Festelektrolytmembran, insbesondere von Brennstoffzellen mit Polymerelektrolytmembran handelt.

26. Verwendung nach einem der Ansprüche 23 bis 25,
**dadurch gekennzeichnet, dass**
in der elektrochemischen Zelle bzw. im Stapel von elektrochemischen Zellen folgende Komponenten mittels des Haftklebstreifens gegeneinander verklebt werden:
(a) Bipolarhalbplatten,
(b) (i) Membran-Elektroden-Einheiten und (ii) Bipolarplatten oder Bipolarhalbplatten,
(c) (i) Stromabnehmerplatten und (ii) Bipolarplatten oder Bipolarhalbplatten, und/oder
(d) (i) Stromabnehmerplatten und (ii) Isolierplatten oder Medienverteilerplatten.

27. Verwendung nach einem der Ansprüche 23 bis 26,
**dadurch gekennzeichnet, dass**
der Haftklebstreifen derart ausgestaltet ist, dass die Komponenten der elektrochemischen Zelle oder des Stapels von elektrochemischen Zellen mittels des Haftklebstreifens vollflächig gegeneinander verklebt werden oder teilflächig gegeneinander verklebt werden, wobei der Haftklebstreifen vorzugsweise (i) als Stanzling vorliegt, der eine Verklebung am Umfang der Komponenten bewirkt, und/oder (ii) mindestens eine Perforation aufweist.

28. Verwendung nach einem der Ansprüche 23 bis 27,
**dadurch gekennzeichnet, dass**
der Haftklebstreifen derart ausgestaltet ist, dass er mindestens einen über die zu verklebenden Oberflächen der Komponenten hervorstehenden vorzugsweise nicht haftklebrigen Anfasserbereich aufweist, von welchem aus der Ablöseprozess durch dehnendes Verstrecken ausgeführt werden kann, wobei es sich beim Anfasserbereich vorzugsweise
(i) um eine Fortpflanzung der optional vorhandenen Trägerschicht handelt, oder
(ii) um eine Fortpflanzung der Schichtenfolge des Haftklebstreifens handelt, wobei im Anfasserbereich auf der einen äußeren oberen und der einen äußeren unteren Fläche des Haftklebstreifens unabhängig voneinander jeweils eine antiadhäsive Schicht angeordnet ist.

## Claims

1. Electrochemical cell or stack of at least two electrochemical cells, where at least two components of the electrochemical cell or of the stack of electrochemical cells are bonded to one another by means of an adhesive strip which is redetachable by extensive stretching substantially in the bond plane, the adhesive strip comprising one or more layers of pressure sensitive adhesive and optionally one or more carrier layers, and one outer upper and one outer lower face of the adhesive strip being formed by the layer or layers of pressure sensitive adhesive.

2. Electrochemical cell or stack of electrochemical cells according to Claim 1,
**characterized in that**
the adhesive strip is redetachable without residue or destruction by extensive stretching substantially in the bond plane.

3. Electrochemical cell or stack of electrochemical cells according to Claim 1 or 2,
**characterized in that**
the adhesive strip consists of a single layer of pressure sensitive adhesive.

4. Electrochemical cell or stack of electrochemical cells according to Claim 1 or 2,
**characterized in that**
the adhesive strip comprises a carrier layer and two layers of pressure sensitive adhesive, the two layers of pressure sensitive adhesive being disposed on the opposite surfaces of the carrier layer and forming one outer upper and one outer lower face of the adhesive strip.

5. Electrochemical cell or stack of electrochemical cells according to any of the preceding claims, **characterized in that**
the adhesive strip comprises at least one layer of pressure sensitive adhesive based on vinylaromatic block copolymer.

6. Electrochemical cell or stack of electrochemical cells according to Claim 5,
**characterized in that**
the vinylaromatic block copolymers comprise polymer blocks (i) predominantly formed of vinylaromatics (A blocks), preferably styrene, and at the same time (ii) blocks predominantly formed by polymerization of 1,3-dienes (B blocks), such as butadiene, isoprene or a mixture of the two monomers, or of butylenes (B blocks), such as isobutylene, for example.

7. Electrochemical cell or stack of electrochemical cells according to Claim 5 or 6,
**characterized in that**
the at least one layer of pressure sensitive adhesive is constructed on the basis of vinylaromatic block copolymer and tackifier resin, a tackifier resin selected preferably having a DACP of greater than 30°C, preferably greater than 37°C, and an MMAP of greater than 50°C, preferably greater than 60°C, and/or having a softening temperature of greater than 95°C, preferably greater than 100°C.

8. Electrochemical cell or stack of electrochemical cells according to any of the preceding claims, **characterized in that**
the adhesive strip comprises at least one layer of pressure sensitive adhesive based on at least one block copolymer which is constructed at least partially of (meth)acrylic derivatives, the block copolymer comprising at least the unit P(A)-P(B)-P(A) composed of at least one polymer block P(B) and at least two polymer blocks P(A), and
- P(A) independently of one another representing homopolymer or copolymer blocks of monomers A, the polymer blocks P(A) each having a softening temperature in the range from +20°C to +175°C,
- P(B) representing a homopolymer or copolymer block of monomers B, the polymer block P(B) having a softening temperature in the range from -100°C to +10°C, and
- the polymer blocks P(A) and P(B) being not homogeneously miscible with one another.

9. Electrochemical cell or stack of electrochemical cells according to any of the preceding claims, **characterized in that**
the adhesive strip comprises at least one layer of pressure sensitive adhesive based on polyisobutylene homopolymer and/or polyisobutylene copolymer, preferably based on polyisobutylene block copolymer.

10. Electrochemical cell or stack of electrochemical cells according to any of the preceding claims, **characterized in that**
the adhesive strip comprises at least one layer of pressure sensitive adhesive based on solid acrylonitrile-butadiene rubber and further comprising tackifier resin, the fraction of tackifier resin being in total 30 to 130 phr.

11. Electrochemical cell or stack of electrochemical cells according to any of the preceding claims, **characterized in that**
the adhesive strip comprises at least one layer of pressure sensitive adhesive which is crosslinked, the layer of pressure sensitive adhesive preferably being a layer of pressure sensitive adhesive based on vinylaromatic block copolymer having crosslinked vinylaromatic endblocks.

12. Electrochemical cell or stack of electrochemical cells according to any of the preceding claims, **characterized in that**
the adhesive strip comprises at least one layer of pressure sensitive adhesive in which there is modified silica, preferably precipitated silica surface-modified with dimethyldichlorosilane.

13. Electrochemical cell or stack of electrochemical cells according to any of Claims 5 to 12, **characterized in that**
the adhesive strip comprises at least one layer of pressure sensitive adhesive which comprises endblock reinforcer resins compatible with the vinylaromatic endblocks in the layer of pressure sensitive adhesive but possessing a higher softening point than the pure endblocks, so raising the softening temperature of the pressure sensitive adhesive, the endblock reinforcer resins being present preferably with a fraction of 0.2 to 10 wt%, based on the total weight of the layer of pressure sensitive adhesive.

14. Electrochemical cell or stack of electrochemical cells according to any of the preceding claims, **characterized in that**
the carrier layer of the adhesive strip, if present, has an elongation at break in the longitudinal direction and/or the transverse direction, more particularly in the longitudinal direction and the transverse direction, of at least 100%, preferably of at least 300%, more preferably of at least 400%, and more particularly of at least 500%, such as of at least 600%, for example.

15. Electrochemical cell or stack of electrochemical cells according to any of the preceding claims, **characterized in that**
the carrier layer of the adhesive strip, if present, is made of polyethylene having a density of 0.94 g/cm³ or less.

16. Electrochemical cell or stack of electrochemical cells according to any of the preceding claims, **characterized in that**
the one or more layers of pressure sensitive adhesive and, if present, the one or more carrier layers are substantially free from platinum poisons.

17. Electrochemical cell or stack of electrochemical cells according to any of the preceding claims, **characterized in that**
the adhesive strip is embodied such that the at least two components of the electrochemical cell or of the stack of electrochemical cells are bonded to one another over the full area by means of the adhesive strip.

18. Electrochemical cell or stack of electrochemical cells according to any of claims 1 to 16, **characterized in that**
the adhesive strip is embodied such that the at least two components of the electrochemical cell or of the stack of electrochemical cells are bonded to one another over part of the area by means of the adhesive strip, the adhesive strip preferably (i) taking the form of a diecut which brings about bonding at the periphery of the components, and/or (ii) having at least one perforation.

19. Electrochemical cell or stack of electrochemical cells according to any of the preceding claims, **characterized in that**
the adhesive strip is embodied such that it has at least one preferably nonadhesive pull tab region, starting from which the detachment operation can be implemented by extensive stretching, said region projecting beyond those surfaces of the at least two components that are to be bonded.

20. Electrochemical cell or stack of electrochemical cells according to Claim 19,
**characterized in that**
the pull tab region of the adhesive strip is not adhesive, and the pull tab region preferably
(i) is an extension of the carrier layer optionally present, or
(ii) is an extension of the layer sequence of the adhesive strip, one antiadhesive layer in each case being disposed in the pull tab region on one outer upper and one outer lower face of the adhesive strip, independently of one another.

21. Electrochemical cell or stack of electrochemical cells according to any of the preceding claims, **characterized in that**
the electrochemical cell is a fuel cell, preferably a fuel cell with solid electrolyte membrane, more particularly a fuel cell with polymer electrolyte membrane, or **in that**
the stack of electrochemical cells is a stack of fuel cells, preferably of fuel cells with solid electrolyte membrane, more particularly of fuel cells with polymer electrolyte membrane.

22. Electrochemical cell or stack of electrochemical cells according to any of the preceding claims, **characterized in that**
in the electrochemical cell or in the stack of electrochemical cells, the following components are bonded to one another by means of the adhesive strip:
(a) bipolar half-plates,
(b) (i) membrane-electrode assemblies and (ii) bipolar plates or bipolar half-plates,
(c) (i) current collector plates and (ii) bipolar plates or bipolar half-plates, and/or
(d) (i) current collector plates and (ii) insulating plates or media distributor plates.

23. Use of an adhesive strip as defined in any of claims 1 to 16 for bonding components in an electrochemical cell or in a stack of at least two electrochemical cells to one another, wherein the electrochemical cell is preferably a fuel cell, more preferably a fuel cell with solid electrolyte membrane, more particularly a fuel cell with polymer electrolyte membrane, or wherein the stack of electrochemical cells is preferably a stack of fuel cells, more preferably of fuel cells with solid electrolyte membrane, more particularly of fuel cells with polymer electrolyte membrane.

24. Use according to Claim 23,
**characterized in that**
Electrochemical cell or the stack of electrochemical cells is operated after bonding and subsequently the adhesive strip is redetached, without residue or destruction, by extensive stretching substantially in the bond plane.

25. Use of an adhesive strip as defined in any of Claims 1 to 16 in bonding components in an electrochemical cell or in a stack of at least two electrochemical cells to one another in order to obtain more particularly residue-free and destruction-free redetachability of the adhesive strip by extensive stretching of the adhesive strip substantially in the bond plane, wherein the electrochemical cell is preferably a fuel cell, more preferably a fuel cell with solid electrolyte membrane, more particularly a fuel cell with polymer electrolyte membrane, or wherein the stack of electrochemical cells is preferably a stack of fuel cells, more preferably of fuel cells with solid electrolyte membrane, more particularly of fuel cells with polymer electrolyte membrane.

26. Use according to any of Claims 23 to 25, **characterized in that**
in the electrochemical cell or in the stack of electrochemical cells, the following components are bonded to one another by means of the adhesive strip:
(a) bipolar half-plates,
(b) (i) membrane-electrode assemblies and (ii) bipolar plates or bipolar half-plates,
(c) (i) current collector plates and (ii) bipolar plates or bipolar half-plates, and/or
(d) (i) current collector plates and (ii) insulating plates or media distributor plates.

27. Use according to any of Claims 23 to 26, **characterized in that**
the adhesive strip is embodied such that the components of the electrochemical cell or of the stack of electrochemical cells are bonded to one another over the full area or bonded to one another over part of the area, by means of the adhesive strip, the adhesive strip preferably (i) taking the form of a diecut which brings about bonding at the periphery of the components, and/or (ii) having at least one perforation.

28. Use according to any of Claims 23 to 27, **characterized in that**
the adhesive strip is embodied such that it has at least one preferably nonadhesive pull tab region, starting from which the detachment operation can be implemented by extensive stretching, said region projecting beyond those surfaces of the components that are to be bonded, wherein the pull tab region preferably
(i) is an extension of the carrier layer optionally present, or
(ii) is an extension of the layer sequence of the adhesive strip, one antiadhesive layer in each case being disposed in the pull tab region on one outer upper and one outer lower face of the adhesive strip, independently of one another.

## Revendications

1. Cellule électrochimique ou empilement d'au moins deux cellules électrochimiques, au moins deux composants de la cellule électrochimique ou de l'empilement de cellules électrochimiques étant collés l'un contre l'autre au moyen d'une bande autoadhésive qui se laisse décoller à nouveau par étirage d'extension essentiellement dans le plan de collage, la bande autoadhésive comprenant une ou plusieurs couches de masse autoadhésive et éventuellement une ou plusieurs couches de support, et une surface supérieure externe et une surface inférieure externe de la bande autoadhésive étant formées de la ou des couches de masse autoadhésive.

2. Cellule électrochimique ou empilement de cellules électrochimiques selon la revendication 1, caractérisé(e) en ce que la bande autoadhésive se laisse décoller à nouveau par étirage d'extension essentiellement dans le plan de collage sans résidus et de manière non destructive.

3. Cellule électrochimique ou empilement de cellules électrochimiques selon la revendication 1 ou 2, caractérisé(e) en ce que la bande autoadhésive est constituée d'une seule couche de masse autoadhésive.

4. Cellule électrochimique ou empilement de cellules électrochimiques selon la revendication 1 ou 2, caractérisé(e) en ce que la bande autoadhésive comprend une couche de support et deux couches de masse autoadhésive, les deux couches de masse autoadhésive étant disposées sur les surfaces opposées de la couche de support et formant une surface supérieure externe et une surface inférieure externe de la bande autoadhésive.

5. Cellule électrochimique ou empilement de cellules électrochimiques selon l'une quelconque des revendications précédentes, caractérisé(e) en ce que la bande autoadhésive comprend au moins une couche de masse autoadhésive à base de copolymère à blocs vinylaromatiques.

6. Cellule électrochimique ou empilement de cellules électrochimiques selon la revendication 5, caractérisé (e) en ce que les copolymères à blocs vinylaromatiques contiennent des blocs de polymère (i) majoritairement formés de composés vinylaromatiques (blocs A), préférablement le styrène, et en même temps (ii) ceux formés majoritairement par polymérisation de 1,3-diènes (blocs B), comme par exemple le butadiène, l'isoprène ou un mélange de ces deux monomères, ou de butylènes (blocs B) comme par exemple l'isobutylène.

7. Cellule électrochimique ou empilement de cellules électrochimiques selon la revendication 5 ou 6, caractérisé (e) en ce que l'au moins une couche de masse autoadhésive est à base de copolymère à bloc vinylaromatiques et de résine adhésive, de préférence une résine adhésive étant choisie qui présente un DACP supérieur à 30 °C, préférablement supérieur à 37 °C et un MMAP supérieur à 50 °C, préférablement supérieur à 60 °C, et/ou qui présente une température de ramollissement supérieure à 95 °C, de préférence supérieure à 100 °C.

8. Cellule électrochimique ou empilement de cellules électrochimiques selon l'une quelconque des revendications précédentes, caractérisé(e) en ce que la bande autoadhésive comprend au moins une couche de masse autoadhésive à base d'au moins un copolymère à blocs qui est construit au moins partiellement à partir de dérivés d'acide (méth)acrylique, le copolymère à bloc présentant au moins le motif P(A)-P(B)-P(A) composé d'au moins un bloc de polymère P(B) et d'au moins deux blocs de polymère P(A), et
- P(A) représentant indépendamment les uns des autres des blocs d'homopolymère ou de copolymère composés de monomères A, les blocs de polymère P(A) présentant à chaque fois une température de ramollissement dans la plage de +20 °C à +175 °C,
- P(B) représentant un bloc d'homopolymère ou de copolymère composé de monomères B, le bloc de polymère P(B) présentant une température de ramollissement dans la plage de -100 °C à +10 °C, et
- les blocs de polymère P(A) et P(B) n'étant pas miscibles l'un avec l'autre de manière homogène.

9. Cellule électrochimique ou empilement de cellules électrochimiques selon l'une quelconque des revendications précédentes, caractérisé(e) en ce que la bande autoadhésive comprend au moins une couche de masse autoadhésive à base d'homopolymère de polyisobutylène et/ou de copolymère de polyisobutylène, de préférence à base de copolymère à blocs de polyisobutylène.

10. Cellule électrochimique ou empilement de cellules électrochimiques selon l'une quelconque des revendications précédentes, caractérisé(e) en ce que la bande autoadhésive comprend au moins une couche de masse autoadhésive à base de caoutchouc solide acrylonitrile-butadiène qui contient en outre une résine adhésive, la proportion de résine adhésive se situant au total de 30 à 130 phr.

11. Cellule électrochimique ou empilement de cellules électrochimiques selon l'une quelconque des revendications précédentes, caractérisé(e) en ce que la bande autoadhésive comprend au moins une couche de masse autoadhésive qui est réticulée, la couche de masse autoadhésive étant de préférence une couche de masse autoadhésive à base de copolymère à blocs vinylaromatiques comportant des blocs terminaux vinylaromatiques réticulés.

12. Cellule électrochimique ou empilement de cellules électrochimiques selon l'une quelconque des revendications précédentes, caractérisé(e) en ce que la bande autoadhésive comprend au moins une couche de masse autoadhésive dans laquelle un acide silicique modifié est contenu, de préférence un acide silicique précipité, modifié en surface avec du diméthyldichlorosilane.

13. Cellule électrochimique ou empilement de cellules électrochimiques selon l'une quelconque des revendications 5 à 12, caractérisé(e) en ce que la bande autoadhésive comprend au moins une couche de masse autoadhésive qui contient des résines renforcées par un bloc terminal qui sont compatibles avec les blocs terminaux vinylaromatiques présents dans la couche de masse autoadhésive, mais possèdent un point de ramollissement supérieur à celui des blocs terminaux purs, ce par quoi la température de ramollissement de la masse autoadhésive est augmentée, les résines renforcées par un bloc terminal étant de préférence présentes en une proportion de 0,2 à 10 % en poids par rapport au poids total de la couche de masse autoadhésive.

14. Cellule électrochimique ou empilement de cellules électrochimiques selon l'une quelconque des revendications précédentes, caractérisé(e) en ce que la couche de support de la bande autoadhésive, si elle est présente, présente une élongation à la rupture d'au moins 100 %, de préférence d'au moins 300 %, plus préférablement d'au moins 400 % et en particulier d'au moins 500 %, comme par exemple d'au moins 600 %, dans la direction longitudinale et/ou la direction transversale, en particulier dans la direction longitudinale et la direction transversale.

15. Cellule électrochimique ou empilement de cellules électrochimiques selon l'une quelconque des revendications précédentes, caractérisé(e) en ce que la couche de support de la bande autoadhésive, si elle est présente, est composée de polyéthylène doté d'une densité de 0,94 g/cm³ ou moins.

16. Cellule électrochimique ou empilement de cellules électrochimiques selon l'une quelconque des revendications précédentes, caractérisé(e) en ce que la ou les couches de masse autoadhésive et, si elles sont présentes, la ou les couches de support sont essentiellement exemptes de poisons du platine.

17. Cellule électrochimique ou empilement de cellules électrochimiques selon l'une quelconque des revendications précédentes, caractérisé(e) en ce que la bande autoadhésive est conçue de telle manière que les au moins deux composants de la cellule électrochimique ou de l'empilement de cellules électrochimiques sont collés l'un contre l'autre sur toute la surface au moyen de la bande autoadhésive.

18. Cellule électrochimique ou empilement de cellules électrochimiques selon l'une quelconque des revendications 1 à 16, caractérisé(e) en ce que la bande autoadhésive est conçue de telle manière que les au moins deux composants de la cellule électrochimique ou de l'empilement de cellules électrochimiques sont collés l'un contre l'autre sur une partie de la surface au moyen de la bande autoadhésive, la bande autoadhésive (i) étant de préférence présente en tant que pièce estampée qui provoque un collage au niveau de la circonférence des composants, et/ou (ii) présente au moins une perforation.

19. Cellule électrochimique ou empilement de cellules électrochimiques selon l'une quelconque des revendications précédentes, caractérisé(e) en ce que la bande autoadhésive est conçue de telle manière qu'elle présente au moins une zone de préhension de préférence non autocollante en saillie au-dessus des surfaces à coller des au moins deux composants, à partir de laquelle le processus de décollement peut être réalisé par étirage d'extension.

20. Cellule électrochimique ou empilement de cellules électrochimiques selon la revendication 19, caractérisé (e) en ce que la zone de préhension de la bande autoadhésive n'est pas autocollante, la zone de préhension étant de préférence
(i) une prolongation de la couche de support éventuellement présente, ou
(ii) une prolongation de la série de couches de la bande autoadhésive, une couche antiadhésive étant disposée à chaque fois dans la zone de préhension sur la surface supérieure externe et la surface inférieure externe de la bande autoadhésive indépendamment l'une de l'autre.

21. Cellule électrochimique ou empilement de cellules électrochimiques selon l'une quelconque des revendications précédentes, caractérisé(e) en ce que la cellule électrochimique est une pile à combustible, de préférence une pile à combustible dotée d'une membrane d'électrolyte solide, en particulier une pile à combustible dotée d'une membrane d'électrolyte polymérique, ou
en ce que l'empilement de cellules électrochimiques est un empilement de piles à combustible, de préférence de piles à combustible dotées d'une membrane d'électrolyte solide, en particulier de piles à combustible dotées d'une membrane d'électrolyte polymérique.

22. Cellule électrochimique ou empilement de cellules électrochimiques selon l'une quelconque des revendications précédentes, caractérisé(e) en ce que dans la cellule électrochimique, respectivement dans l'empilement de cellules électrochimiques, les composants suivants sont collés les uns contre les autres au moyen de la bande autoadhésive :
(a) des demi-plaques bipolaires,
(b) (i) des unités de membrane-électrodes et (ii) des plaques bipolaires ou demi-plaques bipolaires,
(c) (i) des plaques de collecteur de courant et (ii) des plaques bipolaires ou demi-plaques bipolaires, et/ou
(d) (i) des plaques de collecteur de courant et (ii) des plaques isolantes ou plaques de distribution de milieu.

23. Utilisation d'une bande autoadhésive telle que définie dans l'une quelconque des revendications 1 à 16 pour le collage de composants dans une cellule électrochimique ou dans un empilement d'au moins deux cellules électrochimiques les uns contre les autres, la cellule électrochimique étant de préférence une pile à combustible, préférablement une pile à combustible dotée d'une membrane d'électrolyte solide, en particulier une pile à combustible dotée d'une membrane d'électrolyte polymérique, ou l'empilement de cellules électrochimiques étant de préférence un empilement de piles à combustible, préférablement de piles à combustible dotées d'une membrane d'électrolyte solide, en particulier de piles à combustible dotées d'une membrane d'électrolyte polymérique.

24. Utilisation selon la revendication 23, **caractérisée en ce que** la cellule électrochimique ou l'empilement de cellules électrochimiques est mis(e) en fonctionnement après le collage et par la suite la bande autoadhésive est décollée à nouveau par étirage d'extension essentiellement dans le plan de collage, sans résidus et de manière non destructive.

25. Utilisation d'une bande autoadhésive telle que définie dans l'une quelconque des revendications 1 à 16 pour le collage de composants dans une cellule électrochimique ou dans un empilement d'au moins deux cellules électrochimiques les uns contre les autres, afin d'obtenir une aptitude au décollement notamment sans résidus et de manière non destructive de la bande autoadhésive par étirage d'extension de la bande autoadhésive essentiellement dans le plan de collage, la cellule électrochimique étant de préférence une pile à combustible, préférablement une pile à combustible dotée d'une membrane d'électrolyte solide, en particulier une pile à combustible dotée d'une membrane d'électrolyte polymérique, ou l'empilement de cellules électrochimiques étant de préférence un empilement de piles à combustible, préférablement de piles à combustible dotées d'une membrane d'électrolyte solide, en particulier de piles à combustible dotées d'une membrane d'électrolyte polymérique.

26. Utilisation selon l'une quelconque des revendications 23 à 25, **caractérisée en ce que** dans la cellule électrochimique, respectivement dans l'empilement de cellules électrochimiques, les composants suivants sont collés les uns contre les autres au moyen de la bande autoadhésive :
(a) des demi-plaques bipolaires,
(b) (i) des unités de membrane-électrodes et (ii) des plaques bipolaires ou demi-plaques bipolaires,
(c) (i) des plaques de collecteur de courant et (ii) des plaques bipolaires ou demi-plaques bipolaires, et/ou
(d) (i) des plaques de collecteur de courant et (ii) des plaques isolantes ou plaques de distribution de milieu.

27. Utilisation selon l'une quelconque des revendications 23 à 26, **caractérisée en ce que** la bande autoadhésive est conçue de telle manière que les composants de la cellule électrochimique ou de l'empilement de cellules électrochimiques sont collés l'un contre l'autre sur toute la surface ou sont collés l'un contre l'autre sur une partie de la surface au moyen de la bande autoadhésive, la bande autoadhésive (i) étant de préférence présente en tant que pièce estampée qui provoque un collage au niveau de la circonférence des composants, et/ou (ii) présente au moins une perforation.

28. Utilisation selon l'une quelconque des revendications 23 à 27, **caractérisée en ce que** la bande autoadhésive est conçue de telle manière qu'elle présente au moins une zone de préhension de préférence non autocollante en saillie au-dessus des surfaces à coller des composants, à partir de laquelle le processus de décollement peut être réalisé par étirage d'extension, la zone de préhension étant de préférence
(i) une prolongation de la couche de support éventuellement présente, ou
(ii) une prolongation de la série de couches de la bande autoadhésive, une couche antiadhésive étant disposée à chaque fois dans la zone de préhension sur la surface supérieure externe et la surface inférieure externe de la bande autoadhésive indépendamment l'une de l'autre.
